(19) **Europäisches Patentamt / European Patent Office / Office européen des brevets**

(11) **EP 4 648 420 A2**

(12) **EUROPEAN PATENT APPLICATION**
published in accordance with Art. 153(4) EPC

(43) Date of publication:
**12.11.2025 Bulletin 2025/46**

(21) Application number: **24738729.3**

(22) Date of filing: **04.01.2024**

(51) International Patent Classification (IPC):
**H04N 19/593** (2014.01)   **H04N 19/11** (2014.01)
**H04N 19/132** (2014.01)   **H04N 19/176** (2014.01)

(52) Cooperative Patent Classification (CPC):
**H04N 19/11; H04N 19/132; H04N 19/176;
H04N 19/593**

(86) International application number:
**PCT/KR2024/000178**

(87) International publication number:
**WO 2024/147660 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2023  KR 20230001360**

(71) Applicant: **LG Electronics Inc.**
**Yeongdeungpo-gu**
**Seoul 07336 (KR)**

(72) Inventors:
• **CHOI, Jangwon**
 **Seoul 06772 (KR)**
• **PARK, Nae Ri**
 **Seoul 06772 (KR)**
• **YOO, Sunmi**
 **Seoul 06772 (KR)**
• **HONG, Myungoh**
 **Seoul 06772 (KR)**

(74) Representative: **Maikowski & Ninnemann**
**Patentanwälte Partnerschaft mbB**
**Postfach 15 09 20**
**10671 Berlin (DE)**

(54) **INTRA PREDICTION-BASED IMAGE ENCODING/DECODING METHOD, DEVICE, AND RECORDING MEDIUM FOR STORING BITSTREAM**

(57)    An image encoding/decoding method and device are provided. An image decoding method according to the present disclosure may comprise the steps of: generating a first prediction block of a current block on the basis of an intra prediction mode of the current block; generating a second prediction block of the current block on the basis of an intra prediction mode of a neighboring block of the current block; and generating a final prediction block of the current block on the basis of the first prediction block and the second prediction block.

FIG. 22

**Description**

[Technical Field]

The present disclosure relates to an image encoding/decoding method and apparatus, and a recording medium for storing a bitstream, and more specifically, relates to an image encoding/decoding method and apparatus based on intra prediction, and a recording medium for storing a bitstream generated by the image encoding method/apparatus of the present disclosure.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.
Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.
In addition, the present disclosure is to provide an image encoding/decoding method and apparatus for post-processing a prediction block by using a sample in a neighboring block adjacent to a current block.
In addition, the present disclosure is to provide an image encoding/decoding method and apparatus for post-processing the prediction block of a current block based on a prediction block generated by using a sample in a neighboring block adjacent to a current block.
In addition, the present disclosure is to provide an image encoding/decoding method and apparatus for weighted summing a prediction block generated by using a sample in a neighboring block and a prediction block generated based on the intra prediction mode of a current block.
In addition, the present disclosure is to provide a non-transitory computer-readable recording medium for storing a bitstream generated by the image encoding method or apparatus according to the present disclosure.
In addition, the present disclosure is to provide a non-transitory computer-readable recording medium for storing a bitstream which is received and decoded by the image decoding apparatus according to the present disclosure and used for image reconstruction.
In addition, the present disclosure is to provide a method for transmitting a bitstream which is generated by the image encoding method or apparatus according to the present disclosure.
The technical problems to be achieved in the present disclosure are not limited to the technical problems described above, and other technical problems not described may be clearly understood by those of ordinary skill in the art from the following descriptions.

[Technical Solution]

According to an embodiment of the present disclosure, an image decoding method performed by an image decoding apparatus may include generating a first prediction block of a current block based on an intra prediction mode of the current block, generating a second prediction block of the current block based on an intra prediction mode of a neighboring block of the current block and generating a final prediction block of the current block based on the first prediction block and the second prediction block.
According to an embodiment of the present disclosure, the neighboring block may be at least one of an above neighboring block or a left neighboring block adjacent to the current block.
According to an embodiment of the present disclosure, an intra prediction mode of the neighboring block may be determined from intra prediction modes of samples included in the neighboring block.
According to an embodiment of the present disclosure, the intra prediction mode of the neighboring block may be determined in predetermined order from the intra prediction modes of the samples included in the neighboring block.
According to an embodiment of the present disclosure, the intra prediction mode of the neighboring block may be determined in a directional prediction mode among the intra prediction modes of the samples included in the neighboring block.

According to an embodiment of the present disclosure, the intra prediction mode of the neighboring block may be determined in a directional prediction mode within a predetermined range among the intra prediction modes of the samples included in the neighboring block.

According to an embodiment of the present disclosure, the intra prediction mode of the neighboring block may be determined based on a difference between an intra prediction mode of a sample included in the neighboring block and the intra prediction mode of the current block.

According to an embodiment of the present disclosure, based on an intra prediction mode of the samples included in the neighboring block being different, the second prediction block may be generated by weighted summing a plurality of prediction blocks generated by intra prediction modes of each of the samples.

According to an embodiment of the present disclosure, generating the second prediction block may be performed based on the intra prediction mode of the current block being a directional prediction mode.

According to an embodiment of the present disclosure, generating the second prediction block may be performed based on a size of the current block.

According to an embodiment of the present disclosure, generating the second prediction block may be performed based on application information obtained from a bitstream.

According to an embodiment of the present disclosure, the method further includes determining a first weight applied to the first prediction block and determining a second weight applied to the second prediction block, wherein based on the first weight and the second weight, the final prediction block may be generated by weighted summing the first prediction block and the second prediction block, and the first weight and the second weight may be determined based on a x-coordinate of a sample included in the current block, a y-coordinate of the sample included in the current block, a size of the current block, a shape of the current block or a template matching cost.

According to an embodiment of the present disclosure, an image encoding method performed by an image encoding apparatus may include generating a first prediction block of a current block based on an intra prediction mode of the current block, generating a second prediction block of the current block based on an intra prediction mode of a neighboring block of the current block and generating a final prediction block of the current block based on the first prediction block and the second prediction block.

According to an embodiment of the present disclosure, it may be a computer-readable recording medium storing a bitstream generated by an image encoding method.

According to an embodiment of the present disclosure, as a method for transmitting a bitstream generated by an image encoding method, the image encoding method may include generating a first prediction block of a current block based on an intra prediction mode of the current block, generating a second prediction block of the current block based on an intra prediction mode of a neighboring block of the current block and generating a final prediction block of the current block based on the first prediction block and the second prediction block.

[Advantageous Effects]

According to the present disclosure, an image encoding/decoding method and apparatus with improved encoding/decoding efficiency may be provided.

In addition, according to the present disclosure, an image encoding/decoding method and apparatus for post-processing a prediction block by using a sample in a neighboring block adjacent to a current block may be provided.

In addition, according to the present disclosure, an image encoding/decoding method and apparatus for post-processing the prediction block of a current block based on a prediction block generated by using a sample in a neighboring block adjacent to a current block may be provided.

In addition, according to the present disclosure, an image encoding/decoding method and apparatus for weighted summing a prediction block generated by using a sample in a neighboring block and a prediction block generated based on the intra prediction mode of a current block may be provided.

In addition, according to the present disclosure, a non-transitory computer-readable recording medium for storing a bitstream generated by the image encoding method or apparatus according to the present disclosure may be provided.

According to the present disclosure, a non-transitory computer-readable recording medium for storing a bitstream which is received and decoded by the image decoding apparatus according to the present disclosure and used for image reconstruction may be provided.

In addition, according to the present disclosure, a method for transmitting a bitstream generated by the image encoding method or apparatus may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 is a flowchart showing an intra prediction-based video/image encoding method.

FIG. 5 shows an exemplary diagram of the configuration of an intra predictor according to the present disclosure.

FIG. 6 is a flowchart showing an intra prediction-based video/image decoding method.

FIG. 7 shows an exemplary diagram of the configuration of an intra predictor according to the present disclosure.

FIGS. 8A to 8B are diagrams showing a reference sample defined in position dependent intra prediction (PDPC) applied to various prediction modes according to an embodiment of the present disclosure.

FIG. 9 is a diagram for describing a template matching-based encoding/decoding method according to the present disclosure.

FIG. 10 is a diagram showing a method for post-processing the above area of a current block according to an embodiment of the present disclosure.

FIG. 11 is a diagram showing a method for post-processing an above area according to an embodiment of the present disclosure.

FIG. 12 is a diagram showing a method for selecting an above sample within an above neighboring block according to an embodiment of the present disclosure.

FIG. 13 is a flowchart of an image encoding/decoding method according to an embodiment of the present disclosure.

FIG. 14 is a diagram showing a method for post-processing the left area of a current block according to an embodiment of the present disclosure.

FIG. 15 is a diagram showing a method for post-processing a left area according to an embodiment of the present disclosure.

FIG. 16 is a diagram showing a method for selecting a left sample within a left neighboring block according to an embodiment of the present disclosure.

FIG. 17 is a flowchart of an image encoding/decoding method according to an embodiment of the present disclosure.

FIG. 18 is a diagram showing a method for post-processing the above-left area of a current block according to an embodiment of the present disclosure.

FIG. 19 is a diagram showing a method for post-processing an above-left area according to an embodiment of the present disclosure.

FIG. 20 is a diagram showing a method for selecting a sample within a left neighboring block and an above neighboring block according to an embodiment of the present disclosure.

FIG. 21 is a flowchart of an image encoding/decoding method according to an embodiment of the present disclosure.

FIG. 22 is a flowchart of an image encoding/decoding method according to an embodiment of the present disclosure.

FIG. 23 shows an exemplary diagram of a content streaming system to which an embodiment of the present disclosure may be applied.

[Mode for Invention

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "video" may mean a set of images over time.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

In the present disclosure, "at least one of A, B and C" may mean "only A," "only B," "only C," or "any combination of A, B and C." In addition, "at least one of A, B or C" or "at least one of A, B and/or C" may mean "at least one of A, B and C."

Parentheses used in the present disclosure may mean "for example." For example, when indicated as "prediction (intra prediction)", "intra prediction" may be proposed as an example of "prediction". In other words, "prediction" in the present disclosure is not limited to "intra prediction", and "intra prediction" may be proposed as an example of "prediction". In addition, even when indicated as "prediction (intra prediction)", "intra prediction" may be proposed as an example of "prediction".

## Overview of the video coding system

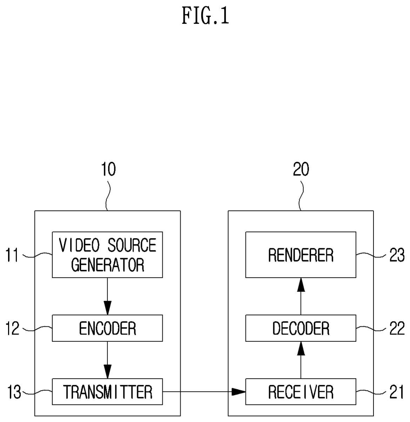

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 120, in which case the transmission apparatus may include at least one processor for obtaining the encoded video/image information or data in bitstream form and a transmitter for delivering it in the form of file or streaming. This receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

**Overview of the image encoding apparatus**

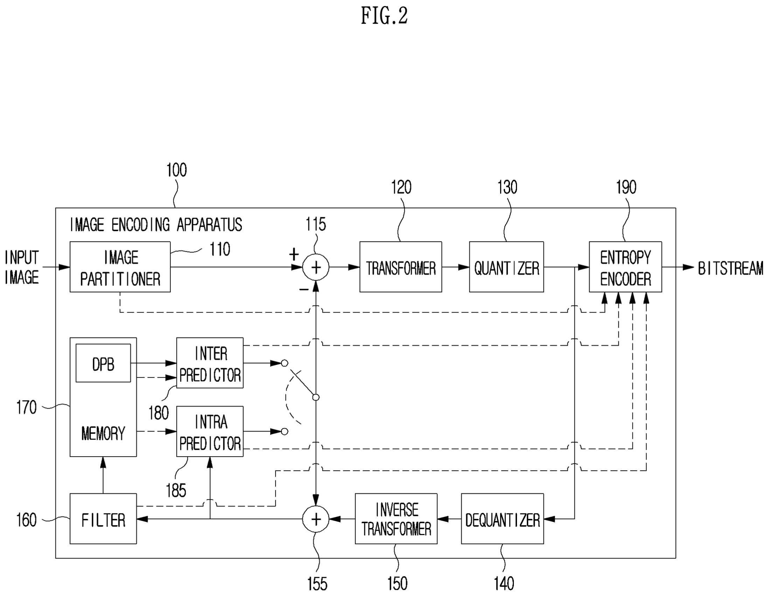

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

Meanwhile, luma mapping with chroma scaling (LMCS) may be applied in picture encoding and/or reconstruction processes.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

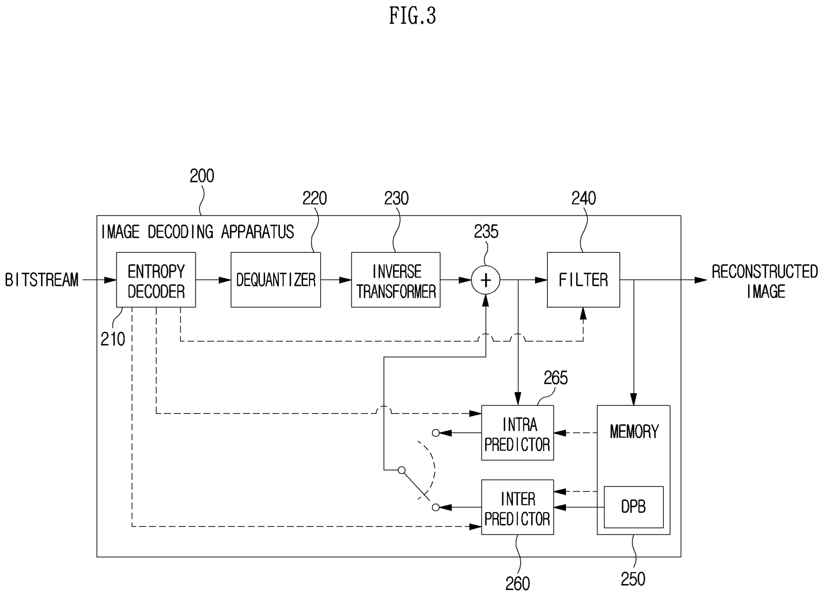

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Overview of Intra Prediction

Hereinafter, intra prediction according to the present disclosure will be described.

Intra prediction may refer to a prediction method which generates prediction samples for the current block based on reference samples within the picture to which the current block belongs (hereinafter, the current picture). When intra prediction is applied to the current block, neighboring reference samples to be used for intra prediction of the current block may be derived. The neighboring reference samples of the current block may include a total of $2 \times nH$ samples neighboring/adjacent to the left boundary and neighboring the bottom-left of the current block of $nW \times nH$ size, a total of $2 \times nW$ samples adjacent to the top boundary and neighboring the top-right of the current block, and one sample neighboring the top-left of the current block. Alternatively, the neighboring reference samples of the current block may include top neighboring samples of multiple columns and left neighboring samples of multiple rows. Additionally, the neighboring reference samples of the current block may include a total of $nH$ samples neighboring a right boundary of the current block of a size of nWxnH, a total of $nW$ samples neighboring a bottom boundary of the current block, and one sample neighboring a bottom-right of the current block.

However, some of the neighboring reference samples of the current block may not yet be decoded or may not be available. In this case, the decoder may construct the neighboring reference samples for prediction by substituting the unavailable samples with available samples. Alternatively, neighboring reference samples for prediction may be constructed through interpolation of the available samples.

When neighboring reference samples are derived, (i) prediction sample may be derived based on the average or interpolation of the neighboring reference samples of the current block, and (ii) prediction sample may be derived based on reference sample located in a specific (prediction) direction for prediction sample among the neighboring reference samples of the current block. Case (i) may be referred to as a non-directional mode or a non-angular mode, and case (ii) may be referred to as a directional mode or an angular mode.

Additionally, the prediction sample may be generated through interpolation between a first neighboring sample located in the prediction direction of the intra prediction mode of the current block and a second neighboring sample located in the opposite direction based on the prediction target sample of the current block among the neighboring reference samples. The above-described case may be referred to as linear interpolation intra prediction (LIP).

Additionally, chroma prediction samples may be generated based on luma samples using a linear model. This case may be called Linear Model (LM) mode.

Additionally, a temporary prediction sample of the current block may be derived based on filtered neighboring reference samples, and a prediction sample of the current block may be derived by calculating a weighted sum of at least one of a reference sample derived according to the intra prediction mode among the conventional neighboring reference samples, i.e. unfiltered neighboring reference samples, and the temporary prediction sample. This case is referred to as Position-dependent intra prediction (PDPC).

Additionally, a reference sample line with the highest prediction accuracy among the multiple neighboring reference sample lines of the current block may be selected, and a prediction sample may be derived using a reference sample located in the prediction direction in the corresponding line. In this case, information about the used reference sample line (i.e., intra_luma_ref_idx) may be encoded and signaled in the bitstream. In this case, it is referred to as multi-reference line intra prediction (MRL) or MRL-based intra prediction. When MRL is not applied, reference samples may be derived from a reference sample line directly adjacent to the current block, and in this case, information about the reference sample line may not be signaled.

Additionally, the current block may be divided into vertical or horizontal subpartitions, and intra prediction may be performed based on the same intra prediction mode for each subpartition. In this case, neighboring reference samples for intra prediction may be derived for each subpartition unit. In other words, the reconstructed sample of the previous subpartition in the encoding/decoding order may be used as the neighboring reference sample of the current subpartition. In this case, the intra prediction mode for the current block is applied identically to the subpartitions, and the neighboring reference sample are derived and used for each subpartition unit, thereby intra prediction performance may be improved in some cases. This prediction method is referred to as intra sub-partitions (ISP) or ISP-based intra prediction.

The intra prediction methods described above may be referred to by various terms, such as intra prediction type or additional intra prediction mode, to distinguish them from directional or non-directional intra prediction mode. For example, the intra prediction method (i.e., intra prediction type or additional intra prediction mode, etc.) may include at least one of the above-described LIP, LM, PDPC, MRL, or ISP. A general intra prediction method that excludes specific intra prediction type such as the LIP, the LM, the PDPC, the MRL, the ISP, etc. may be referred to as a normal intra prediction type. The normal intra prediction type may be generally applied when the specific intra prediction type described above is not used, and prediction may be performed based on the intra prediction mode described above. Meanwhile, post-processing filtering may be performed on the derived prediction sample when necessary.

Specifically, the intra prediction procedure may include an intra prediction mode/type determination step, a neighboring reference sample derivation step, and an intra prediction mode/type-based prediction sample derivation step. Additionally, a post-filtering step may be performed on the derived prediction sample when necessary.

Meanwhile, in addition to the intra prediction types described above, affine linear weighted intra prediction (ALWIP) may be used. The ALWIP may also be referred to as linear weighted intra prediction (LWIP) or matrix weighted intra prediction or matrix-based intra prediction (MIP). When MIP is applied to a current block, prediction samples for the current block may be derived by i) using neighboring reference samples on which an averaging procedure has been performed, ii) performing a matrix-vector multiplication procedure, and iii) further performing a horizontal/vertical interpolation procedure when necessary. Intra prediction modes used for MIP may be configured differently from those used in LIP, PDPC, MRL, ISP intra prediction, or normal intra prediction described above. The intra prediction mode for MIP may be referred to as the MIP intra prediction mode, MIP prediction mode, or MIP mode. For example, the matrix and offset used in the matrix-vector multiplication may be set differently depending on the intra prediction mode for MIP. Here, the matrix may be referred to as (MIP) weight matrix, and the offset may be referred to as the (MIP) offset vector or (MIP) bias vector. A specific MIP method will be described later.

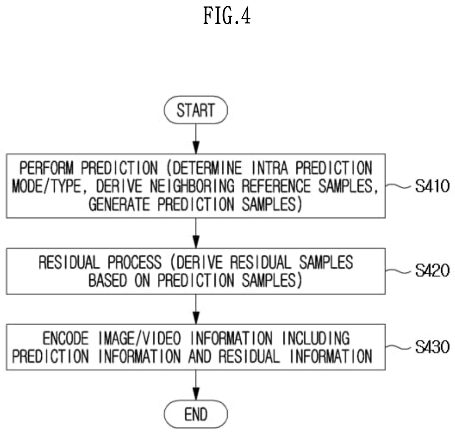

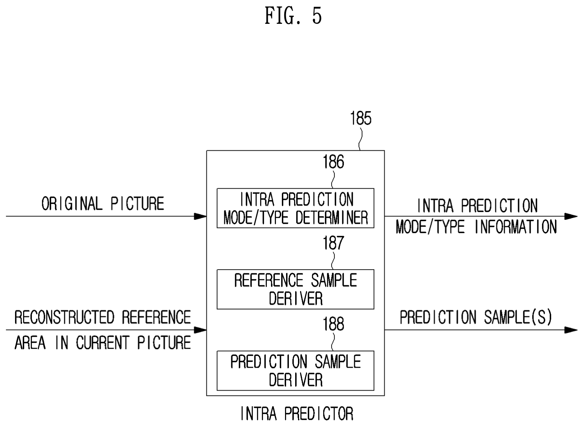

The block reconstruction procedure based on intra prediction and the intra predictor in the encoding apparatus will be described later with reference to FIG. 4 and FIG. 5.

FIG. 4 is a flowchart showing an intra prediction-based video/image encoding method.

The encoding method of FIG. 4 may be performed by the image encoding apparatus of FIG. 2. Specifically, step S410 may be performed by the intra predictor 185, and step S420 may be performed by the residual processor. Specifically, step S420 may be performed by the subtractor 115. Step S430 may be performed by the entropy encoder 190. The prediction information in step S430 may be derived by the intra predictor 185, and the residual information in step S430 may be derived by the residual processor. The residual information refers to information about the residual samples. The residual information may include information on the quantized transform coefficients of the residual samples. As described above, the residual samples are derived as transform coefficients through the transformer 120 of the image encoding apparatus, and the transform coefficients may be derived as quantized transform coefficients through the quantizer 130. The information on the quantized transform coefficients may be encoded in the entropy encoder 190 through the residual coding process.

The image encoding apparatus may perform intra prediction for the current block S410. The image encoding apparatus may determine the intra prediction mode/type for the current block, may derive neighboring reference samples of the current block, and may generate prediction samples within the current block based on the intra prediction mode/type and the neighboring reference samples. Here, the processes of determining the intra prediction mode/type, deriving the neighboring reference samples, and generating the prediction samples may be performed simultaneously, or one process may be performed before another.

FIG. 5 shows an exemplary diagram of the configuration of an intra predictor 185 according to the present disclosure.

As shown in FIG. 5, the intra predictor 185 of the image encoding apparatus may include an intra prediction mode/type determiner 186, a reference sample deriver 187, and/or a prediction sample deriver 188. The intra prediction mode/type determiner 186 may determine the intra prediction mode/type for the current block. The reference sample deriver 187 may derive the neighboring reference samples of the current block. The prediction sample deriver 188 may derive the prediction samples of the current block. Meanwhile, although not illustrated, when the prediction sample filtering process which will be described later is performed, the intra predictor 185 may further include a prediction sample filter (not shown).

The image encoding apparatus may determine the intra prediction mode/type applied to the current block among a plurality of intra prediction modes/types. The image encoding apparatus may compare the rate-distortion costs (RD cost) of the intra prediction modes/types and may determine the optimal intra prediction mode/type for the current block.

Meanwhile, the image encoding apparatus may perform a prediction sample filtering process. Prediction sample filtering may be referred to as post-filtering. Through the prediction sample filtering process, some or all of the prediction samples may be filtered. In some cases, the prediction sample filtering process may be omitted.

Referring again to FIG. 4, the image encoding apparatus may generate residual samples for the current block based on the prediction samples or the filtered prediction samples S420. The image encoding apparatus may derive the residual samples by subtracting the prediction samples from the original samples of the current block. In other words, the image encoding apparatus may derive residual sample value by subtracting the corresponding prediction sample value from the original sample value.

The image encoding apparatus may encode image information including information about the intra prediction (prediction information) and residual information about the residual samples S430. The prediction information may include intra prediction mode information and/or intra prediction method information. The image encoding apparatus may output the encoded image information in the form of a bitstream. The output bitstream may be transmitted to the image decoding apparatus through a storage medium or a network.

The residual information may include a residual coding syntax, which will be described later. The image encoding apparatus may derive quantized transform coefficients by transforming/quantizing the residual samples. The residual information may include information on the quantized transform coefficients.

Meanwhile, as described above, the image encoding apparatus may generate a reconstructed picture (including reconstructed samples and reconstructed block). The image encoding apparatus may perform dequantization/inverse transform on the quantized transform coefficients to derive (modified) residual samples. The reason for applying dequantization/inverse transform after transform/quantization of the residual samples is to derive the residual samples identical to the residual samples derived in the image decoding apparatus. The image encoding apparatus may generate a reconstructed block including reconstructed samples for the current block based on the prediction samples and the (modified) residual samples. A reconstructed picture for the current picture may be generated based on the reconstructed block. As described above, an in-loop filtering process may further be applied to the reconstructed picture.

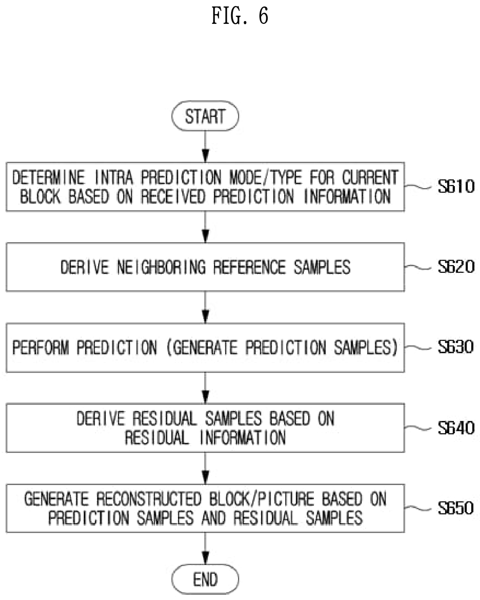

FIG. 6 is a flowchart showing an intra prediction-based video/image decoding method.

The image decoding apparatus may perform operations corresponding to the operations performed in the image encoding apparatus.

The decoding method in FIG. 6 may be performed by the image decoding apparatus in FIG. 3. Steps S610 to S630 may be performed by the intra predictor 265, and the prediction information in step S610 and the residual information in step S640 may be obtained from the bitstream by the entropy decoder 210. The residual processor of the image decoding apparatus may derive residual samples for the current block based on the residual information S640. Specifically, the dequantizer 220 of the residual processor may perform dequantization on the quantized transform coefficients derived based on the residual information to obtain transform coefficients, and the inverse transformer 230 of the residual processor may perform inverse transform on the transform coefficients to derive residual samples for the current block. Step S650 may be performed by the adder 235 or the reconstructor.

Specifically, the image decoding apparatus may derive the intra prediction mode/type for the current block based on the received prediction information (i.e., intra prediction mode/type information) S610. Additionally, the image decoding apparatus may derive neighboring reference samples of the current block S620. The image decoding apparatus may generate prediction samples within the current block based on the intra prediction mode/type and the neighboring reference samples S630. In this case, the image decoding apparatus may perform a prediction sample filtering process. Prediction sample filtering may be referred to as post-filtering. Through this prediction sample filtering process, some or all of the prediction samples may be filtered. In some cases, the prediction sample filtering process may be omitted.

The image decoding apparatus may generate residual samples for the current block based on the received residual information S640. The image decoding apparatus may generate reconstructed samples for the current block based on the prediction samples and the residual samples and derive a reconstructed block that includes the reconstructed samples S650. A reconstructed picture for the current picture may be generated based on the reconstructed block. As described above, an in-loop filtering process may further be applied to the reconstructed picture.

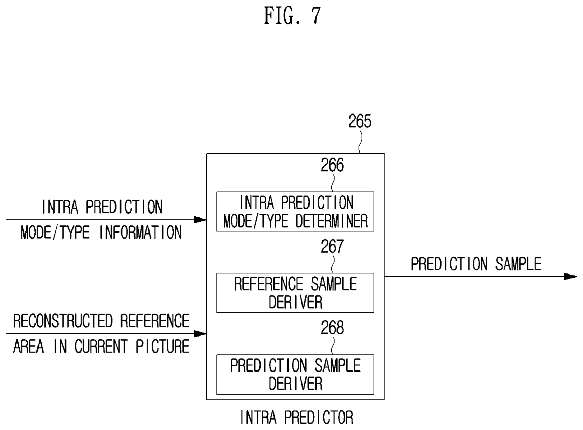

FIG. 7 shows an exemplary diagram of the configuration of an intra predictor 265 according to the present disclosure.

As shown in FIG. 7, the intra predictor 265 of the image decoding apparatus may include an intra prediction mode/type determiner 266, a reference sample deriver 267, and a prediction sample deriver 268. The intra prediction mode/type determiner 266 may determine the intra prediction mode/type for the current block based on the intra prediction mode/type information generated in the intra prediction mode/type determiner 186 of the image encoding apparatus and signaled, and the reference sample deriver 266 may derive neighboring reference samples of the current block from the reconstructed reference area in the current picture. The prediction sample deriver 268 may derive prediction samples of the current block. Meanwhile, although not illustrated, when the above-described prediction sample filtering process is performed, the intra predictor 265 may further include a prediction sample filter (not shown).

The intra prediction mode information may include, for example, flag information (i.e., intra_luma_mpm_flag) indicating whether the most probable mode (MPM) is applied to the current block or the remaining mode is applied, and when the MPM is applied to the current block, the intra prediction mode information may further include index information (i.e., intra_luma_mpm_idx) indicating one of the intra prediction mode candidates (MPM candidates). The intra prediction mode candidates (MPM candidates) may be configured as an MPM candidate list or an MPM list. Additionally, when the MPM is not applied to the current block, the intra prediction mode information may further include remaining mode information (i.e., intra_luma_mpm_remainder) indicating one of the remaining intra prediction modes excluding the intra prediction mode candidates (MPM candidates) . The image decoding apparatus may determine the intra prediction mode of the current block based on the intra prediction mode information.

Additionally, the intra prediction method information may be implemented in various forms. As an example, the intra prediction method information may include intra prediction method index information indicating one of the intra prediction methods. As another example, the intra prediction method information may include at least one of reference sample line information (i.e., intra_luma_ref_idx) indicating whether the MRL is applied to the current block and, when the MRL is applied, which reference sample line is used, ISP flag information (i.e., intra_subpartitions_mode_flag) indicating whether the ISP is applied to the current block, ISP type information (i.e., intra_subpartitions_split_flag) indicating a split type of subpartitions when the ISP is applied, flag information indicating whether PDPC is applied, or flag information indicating whether LIP is applied. Additionally, the intra prediction type information may include a MIP flag indicating whether MIP is applied to the current block. In the present disclosure, the ISP flag information may be referred to as an ISP application indicator.

The intra prediction mode information and/or the intra prediction method information may be encoded/decoded through the coding method described in the present disclosure. For example, the intra prediction mode information and/or the intra prediction method information may be encoded/decoded through entropy coding (i.e., CABAC, CAVLC) based on truncated (rice) binary code.

Meanwhile, in addition to PLANAR mode, DC mode, and directional intra prediction modes, the intra prediction mode may further include a cross-component linear model (CCLM) mode for chroma sample. The CCLM mode may be classified into L_CCLM, T_CCLM, and LT_CCLM depending on whether left samples, top samples, or both are considered for deriving CCLM parameter, and it may be applied only to chroma component.

The intra prediction mode, for example, may be indexed as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, or MIP described above. The intra prediction type may be indicated based on intra prediction type information, and the intra prediction type information may be implemented in various forms. As an example, the intra prediction type information may include an intra prediction type index that indicates one of the intra prediction types. In another example, the intra prediction type information may include at least one of reference sample line information (i.e., intra_luma_ref_idx) indicating whether MRL is applied to the current block and, when MRL is applied, which reference sample line is used, an ISP flag information (i.e., intra_subpartitions_mode_flag) indicating whether ISP is applied to the current block; ISP type information (i.e., intra_subpartitions_split_flag) indicating the partitioning type of subpartitions when ISP is applied, a flag information indicating whether PDPC is applied, or a flag information indicating whether LIP is applied. Additionally, the intra prediction type information may include an MIP flag (which may be referred to as intra_mip_flag) indicating whether MIP is applied to the current block.

## Overview of Position Dependent intra Prediction (PDPC)

PDPC may represent an intra prediction method that derives reference samples filtered by performing filtering based on a filter for the PDPC, derives the temporary prediction sample of the current block based on the intra prediction mode of the current block and the filtered reference samples and derives the prediction sample of the current block by weighted summing the temporary prediction sample and at least one reference sample derived according to the intra prediction mode among the existing reference samples, i.e., the unfiltered reference samples. Here, the predefined filter may be one of the five 7-tap filters. Alternatively, the above-described filter may be one of a 3-tap filter, a 5-tap filter, and a 7-tap filter. The 3-tap filter, the 5-tap filter and the 7-tap filter may represent a filter having 3 filter coefficients, a filter having 5 filter coefficients and a filter having 7 filter coefficients, respectively.

For example, the prediction result of an intra planar mode may be additionally modified by PDPC.

Alternatively, as an example, the PDPC may be applied to an intra planar mode, an intra DC mode, a horizontal intra prediction mode, a vertical intra prediction mode, an intra prediction mode in a bottom-left direction (i.e., intra prediction mode no.2) and eight directional intra prediction modes adjacent to an intra prediction mode in the bottom-left direction, an intra prediction mode in an above-right direction and eight directional intra prediction modes adjacent to an intra prediction mode in the above-right direction without separate signaling.

Specifically, when the PDPC is applied, ae prediction sample at the (x, y) coordinate predicted based on the linear combination of an intra prediction mode and reference samples may be derived as in Equation 1 below.

【Equation 1】

$$pred(x,y) = (wL \times R_{-1,y} + wT \times R_{x,-1} - wTL \times R_{-1,-1}$$
$$+ (64 - wL - wT + wTL) \times pred(x,y) + 32) \gg 6$$

Here, R_(x,-1) and R_(-1,y) represent an above reference sample and a left reference sample located on the above and left of a current sample at the (x, y) coordinate, and R_(-1,-1) represents an above-left reference sample located at the above-left corner of the current block.

Meanwhile, when PDPC is applied to an intra planar mode, an intra DC mode, a horizontal intra prediction mode and a vertical intra prediction mode, additional boundary filters such as the DC mode boundary filter or the vertical/horizontal mode edge filter, etc. of the existing HEVC may not be required.

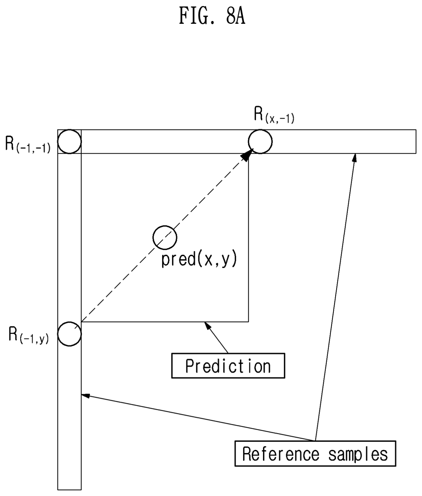

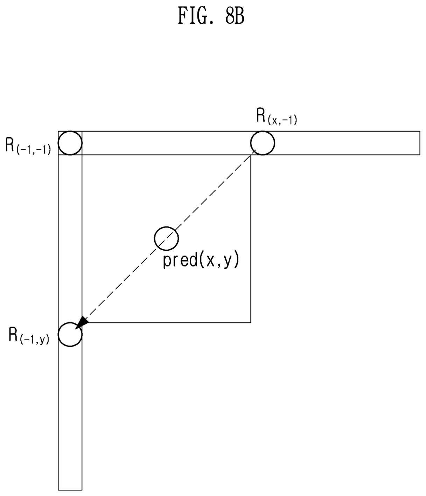

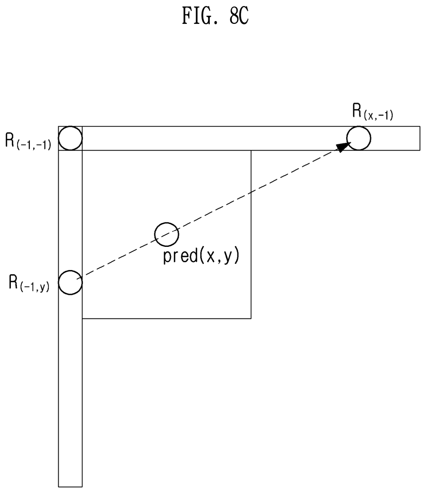

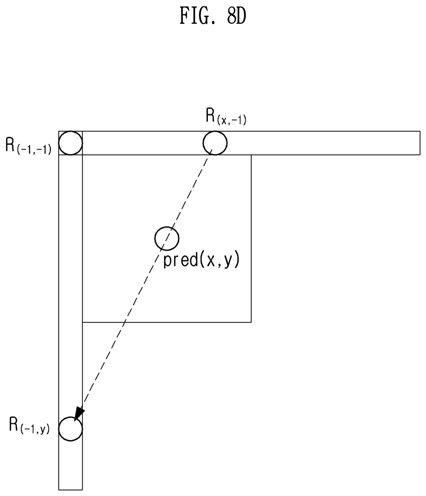

FIGS. 8A to 8D represent reference samples ($R_{x,-1}$, $R_{-1,y}$, $R_{-1,-1}$) defined in PDPC applied to various prediction modes.

Meanwhile, the weights of the PDPC may be derived based on prediction modes. The weights of the PDPC may be derived as in Table 2 below.

[Table 2]

| Prediction modes | wT | wL | wTL |
|---|---|---|---|
| Diagonal top-right | 16>>((y'<<1)>>shift) | 16>>((x'<<1)>>shift) | 0 |
| Diagonal bottom-left | 16>>((y'<<1)>>shift) | 16>>((x'<<1)>>shift) | 0 |
| Adjacent diagonal top-right | 32>>((y'<<1)>>shift) | 0 | 0 |
| Adjacent diagonal bottom-left | 0 | 32>>((x'<<1)>>shift) | 0 |

Position dependent intra prediction combination (PDPC) generates a prediction sample by using a reference sample according to a prediction mode, and then refines a prediction sample by using a neighboring reference sample. Instead of being applied to all intra prediction modes, PDPC is limitedly applied to the neighboring modes of Planar, DC, 2 (bottom-right directional mode), VDIA (above-left directional mode), Hor (horizontal directional mode), Ver (vertical directional mode) and 2 modes (mode 3 to mode 10) and the neighboring modes of a VDIA mode (mode 58 to mode 65) based on 65 directional intra prediction modes. In addition, instead of being applied to all prediction samples in a block to be currently encoded, it is variably applied considering the size of a block.

### Overview of Template-based intra mode derivation (TIMD)

For each intra prediction mode in a MPM, the sum of absolute transformed differences (SATD) between a prediction sample and the reconstructed sample of a template is calculated. The first two intra prediction modes with the minimum SATD are selected as a TIMD mode. These two TIMD modes are fused with a weight, and this weighted intra prediction is used to encode a current CU. Position dependent intra prediction combination (PDPC) may be included in the derivation process of a TIMD mode.

The cost of two selected modes is compared with a threshold value, and two cost factors are applied in a test as follows.

$$costMode2 < 2*costMode1$$

If the condition is true, fusion is applied, and otherwise, only mode 1 is used.

The weight of a mode is calculated by their SATD cost as follows.

$$weight1 = costMode2/(costMode1+ costMode2)$$

$$weight2 = 1 - weight1$$

### Template matching(TM)

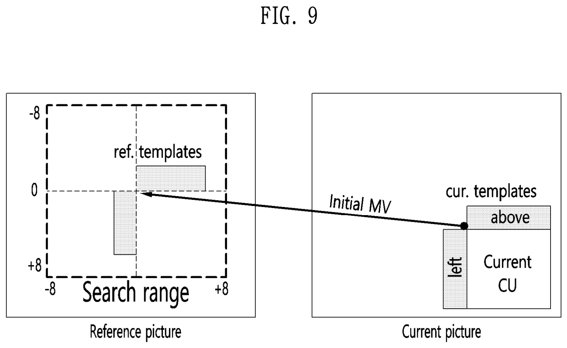

FIG. 9 is a diagram for describing a template matching-based encoding/decoding method according to the present disclosure.

Template Matching (TM) is a method for deriving a motion vector performed on a decoder side, which is a method for refining the motion information of a current block by finding a template (hereinafter, referred to as a "reference template") in a reference picture that is most similar to a template (hereinafter, referred to as a "current template") adjacent to a current block (e.g., current coding unit, current CU). A current template may be the above neighbor block and/or the left neighbor block of a current block or a part of their neighbor block. In addition, a reference template may be determined to have the same size as a current template.

As shown in FIG. 9, when the initial motion vector of a current block is derived, a search for a better motion vector may be performed in the neighboring area of an initial motion vector. For example, the range of a neighboring area where the search is performed may be within a [-8, +8]-pel search range based on an initial motion vector. In addition, the size of a search step for performing a search may be determined based on the AMVR mode of a current block. In addition, template matching may be performed continuously with a bilateral matching process in a merge mode.

When the prediction mode of a current block is an AMVP mode, a motion vector predictor candidate (MVP candidate) may be determined based on a template matching error. For example, a motion vector predictor candidate (MVP candidate) that minimizes an error between a current template and a reference template may be selected. Afterwards, template matching for refining a motion vector may be performed on the selected motion vector predictor candidate. In this case, template matching for refining a motion vector may not be performed on a motion vector predictor candidate that is not selected.

More specifically, refinement for the selected motion vector predictor candidate may start from full-pel (integer-pel) accuracy within a [-8, +8]-pel search range by using an iterative diamond search. Alternatively, for a 4-pel AMVR mode, it may start from 4-pel accuracy. Afterwards, a search for half-pel and/or quarter-pel accuracy may be followed according to an AMVR mode. According to the search process, a motion vector predictor candidate may maintain the same motion vector accuracy as indicated by an AMVR mode even after a template matching process. In the iterative search process, when a difference between a previous minimum cost and a current minimum cost is less than an arbitrary threshold value, the search process is terminated. The threshold value may be the same as the area of a block, i.e., the number of samples in a block. Table 3 is an example of a search pattern according to an AMVR mode and a merge mode with AMVR.

[Table 3]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | V | | | | | |
| Full-pel diamond | | V | V | V | V | V |
| Full-pel cross | | V | V | V | V | V |
| Half-pel cross | | | V | V | V | V |
| Quarter-pel cross | | | | V | V | |
| 1/8-pel cross | | | | | V | |

When the prediction mode of a current block is a merge mode, a similar search method may be applied to a merge candidate indicated by a merge index. As shown in Table 1 above, template matching may be performed up to 1/8-pel accuracy or may skip half-pel accuracy or lower, which may be determined depending on whether an alternative interpolation filter is used according to merge motion information. In this case, the alternative interpolation filter may be a filter used when AMVR is a half-pel mode. In addition, when template matching is available, the template matching may operate as an independent process according to whether bilateral matching (BM) is available, or may operate as an additional motion vector refinement process between block-based bilateral matching and sub-block-based bilateral matching. Whether the template matching is available and/or whether bilateral matching is available may be determined according to checking availability conditions. In the above, the accuracy of a motion vector may mean the accuracy of a motion vector difference (MVD).

Hereinafter, an image encoding/decoding method according to an embodiment of the present disclosure will be described in detail.

The present disclosure relates to intra prediction. Specifically, the present disclosure relates to a method for post-processing a prediction block generated in a directional intra prediction mode or a non-directional intra prediction mode based on the intra prediction mode of a neighboring block. Encoding efficiency may be improved by post-processing the prediction block of a current block based on the intra prediction mode of a neighboring block.

In the Versatile Video Coding (VVC) video codec and Enhanced Compression Model (ECM), encoding efficiency may be improved by performing post-processing such as a Position Dependent Intra Prediction (PDPC) prediction method on a block generated by intra prediction. A PDPC prediction method may be a method for applying pixel smoothing using a neighboring reference sample based on the intra prediction mode of a current block. PDPC prediction applies smoothing by using only the reference sample of a current block. Accordingly, a PDPC prediction method may not be applied in an intra prediction mode in a negative direction.

The present disclosure proposes a method for post-processing a current block by considering the intra prediction mode of the neighboring block of a current block to which intra prediction is applied. Since a method proposed in the present disclosure performs post-processing by considering the intra prediction mode of a neighboring block, post-processing may be performed adaptively on the pixel correlation of a neighboring block. In addition, the present disclosure has an advantage that post-processing may be performed regardless of the intra prediction mode of a current block.

**Embodiment 1**

According to an embodiment of the present disclosure, a current block may be post-processed by considering the intra prediction mode of the neighboring block of a current block to which intra prediction is applied. In other words, a current block may be post-processed based on an intra prediction mode in the neighboring block and the prediction block of a current block to which intra prediction is applied.

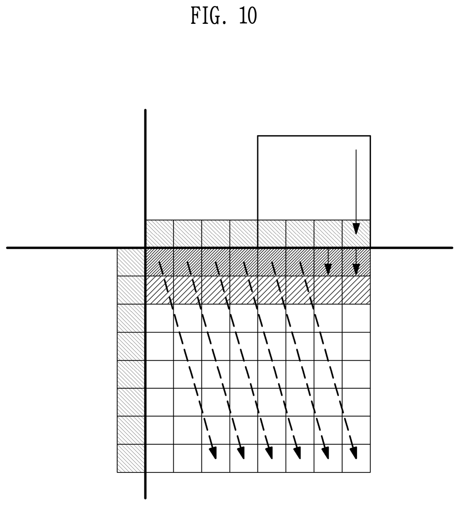

FIG. 10 is a diagram showing a method for post-processing the above area of a current block according to an embodiment of the present disclosure. In order to post-process the above area of a current block, a current block may be post-processed by weighted summing a prediction block generated by applying the intra prediction mode of a sample in an above neighboring block to a current block and a prediction block generated based on the intra prediction mode of a current block. In this case, the post-processing of a current block may be performed only on above N lines in a current block. N may be a natural number greater than or equal to 1 and less than or equal to a CTU size. For example, FIG. 10 shows an example in which post-processing is applied only to the above two lines of a 8x8 block. However, the present disclosure is not limited thereto, and the post-processing of a current block may also be performed on all samples in a current block.

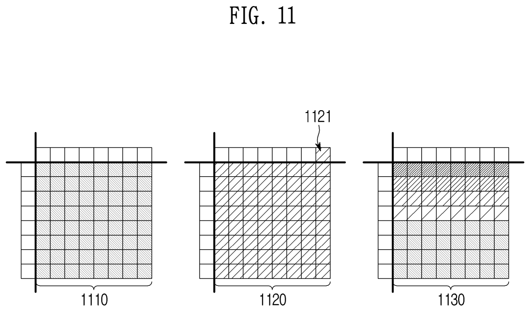

FIG. 11 is a diagram showing a method for post-processing an above area according to an embodiment of the present disclosure. Block 1110 in FIG. 11 may be a block predicted through an intra prediction mode selected from a current block (i.e., the first prediction block). In other words, block 1110 may be a prediction block generated by using the intra prediction mode of a current block (i.e., the first prediction block). Block 1120 may be a prediction block obtained by applying the intra prediction mode of a neighboring block including an above sample 1121 to a current block (i.e., the second prediction block). In other words, block 1120 may be a prediction block generated by applying the intra prediction mode of an above sample 1121 included in a neighboring block to a current block (i.e., the second prediction block).

Block 1130 may be a prediction block to which new post-processing is applied through the weighted sum of block 1110 and block 1120 (i.e., a final prediction block). Post-processing may be applied to above N lines in a current block. N may be a natural number greater than or equal to 1 and less than or equal to a CTU size. Block 1130 in FIG. 11 may be a block to which post-processing is applied to above 4 lines in a current block. The topmost line, which is the darkest area in block 1130, may mean that a weight applied to the sample value of a sample in block 1120 is the highest, and a weight applied to the sample value of a sample in block 1120 may become smaller as it goes to the lower line. In other words, a weight applied to the sample value of a sample in block 1120 may become smaller as it gets farther away from an above neighboring block. However, the present disclosure is not limited thereto, and the post-processing of a current block may also be performed on all samples in a current block.

The post-processing of an above area according to the present disclosure may be calculated by using Equation 2 below.

【Equation 2】

$$pred(x,y) = w0(w,y) * pred\_org(x,y) + w1(w,y) * pred\_above(x,y)$$

In Equation 2, (x, y) means the coordinate of a sample in a block. pred(x, y) means a final prediction block to which post-processing is applied. pred_org(x, y) (i.e., the first prediction block) means a sample value predicted through an intra prediction mode selected from a current block. In other words, pred_org(x, y) means the sample value of a prediction sample generated by using the intra prediction mode of a current block. pred_above(x, y) (i.e., the second prediction block) means a pixel value obtained by applying intra prediction to a current block by using the intra prediction mode of an above neighboring block including an above reference sample. In other words, pred_above(x, y) means the sample value of the prediction sample of a current block generated by using the intra prediction mode of an above sample included in the above neighboring block of a current block. An intra prediction mode used to generate pred_above(x,y) may be selected among the intra prediction modes of samples included in an above neighboring block.

w0(x,y) means a weight applied to pred_org(x,y). w1(x,y) means a weight applied to pred_above(x,y). Since the sum of w0(x,y) and w1(x,y) is always 1, a relationship between w0(x,y) and w1(x,y) may always satisfy Equation 3 below.

【Equation 3】

$$w0(w,y) = 1 - w1(x,y)$$

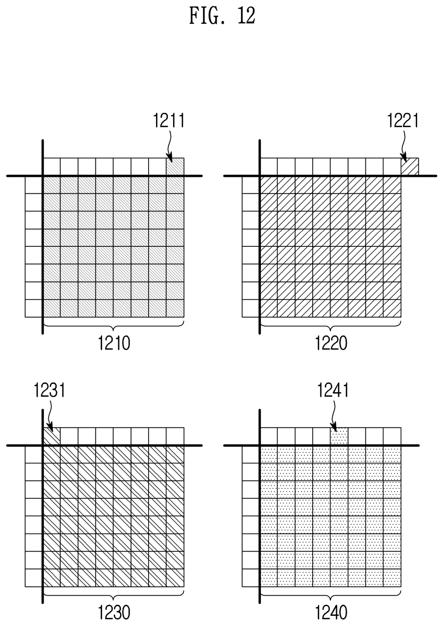

FIG. 12 is a diagram showing a method for selecting an above sample within an above neighboring block according to an embodiment of the present disclosure. Block 1210 in FIG. 12 may be pred_above(x,y) generated by using the intra prediction mode of an above sample 1211 included in the above neighboring block of a current block. Block 1220 may be pred_above(x,y) generated by using the intra prediction mode of an above-right sample 1221 included in the above neighboring block of a current block.

Block 1230 may be pred_above(x,y) generated by using the intra prediction mode of an above-left sample 1231 included in the above neighboring block of a current block. Block 1240 may be pred_above(x,y) generated by using the intra prediction mode of an above-center sample 1241 included in the above neighboring block of a current block. An above neighboring block referred to in the present disclosure may be a concept referring to all blocks located on the above of a current block. In other words, both the above-left neighboring block and the above-right neighboring block of a current block may be included in an above neighboring block.

When selecting an intra prediction mode from an above neighboring block, when there are various intra prediction modes, there may be various methods for determining which intra prediction mode is selected to generate pred_above(x,y). In other words, there may be various methods for searching samples in an above neighboring block in order to determine the intra prediction mode of which sample among the samples included in an above neighboring block.

As an example, an intra prediction mode for generating pred_above(x,y) may be selected in the order of the intra prediction mode of an above sample 1211, an above-right sample 1221, an above-left sample 1231 and an above-center sample 1241. However, when the intra prediction mode of a current block and the intra prediction mode of a sample in a selected above neighboring block are the same, the intra prediction mode of a corresponding sample may be excluded from selection. For example, when the intra prediction mode of a current block is directional mode 34 and the intra prediction mode of an above sample 1211 is also directional mode 34, an above sample 1211 may be excluded from selection. In this case, the intra prediction mode of an above-right sample 1221 in the next order may be selected. The selection order of samples included in an above neighboring block is not limited to the example and may be interchanged.

As another example, an intra prediction mode for generating pred_above(x,y) may be selected in the order of the intra prediction mode of an above sample 1211, an above-right sample 1221 and an above-left sample 1231. However, when the intra prediction mode of a current block and the intra prediction mode of a sample in a selected above neighboring block are the same, the intra prediction mode of a corresponding sample may be excluded from selection. The selection order of samples included in an above neighboring block is not limited to the example and may be interchanged.

As another example, an intra prediction mode for generating pred_above(x,y) may be selected as one of the intra prediction modes of all samples included in an above neighboring block. In this case, a sample in an above neighboring block for generating pred_above(x,y) may be determined as a sample selected by searching from an above-left sample 1231 in a right direction. However, when the intra prediction mode of a current block and the intra prediction mode of a sample in a selected above neighboring block are the same, the intra prediction mode of a corresponding sample may be excluded from selection.

As another example, an intra prediction mode for generating pred_above(x,y) may be selected as one of the intra prediction modes of all samples included in an above neighboring block. In this case, a sample in an above neighboring block for generating pred_above(x,y) may be determined as a sample selected by searching from an above-right sample 1221 in a left direction. However, when the intra prediction mode of a current block and the intra prediction mode of a sample in a selected above neighboring block are the same, the intra prediction mode of a corresponding sample may be excluded from selection.

When there is no intra prediction mode different from the intra prediction mode of a current block although samples in an above neighboring block are searched by the method, a post-processing method proposed in the present disclosure may not be applied.

According to an embodiment of the present disclosure, when searching samples in an above neighboring block, a specific condition may also be considered.

- When searching samples in an above neighboring block, a non-directional mode (a PLANAR mode, a DC mode) is excluded.
- When searching samples in an above neighboring block, a Matrix-based Intra prediction (MIP) mode, an Intra Sub-Partitions (ISP) mode, a Multi-Reference Line (MRL) mode, a Spatial Geometric Partitioning Mode (SGPM) mode, a Combined Inter and Intra Prediction (CIIP) mode, a Decoder side intra mode derivation (DIMD) mode, a Template-based intra mode derivation (TIMD) mode and/or an IntraTemplatematching mode are excluded (the exclusion of the modes may be applied independently, or a plurality of modes may be selected and applied).
- When searching samples in an above neighboring block, a cross-component intra prediction mode is excluded.
- When searching samples in an above neighboring block, only intra prediction modes with directional modes 50 to 80 are selected.
- When searching samples in an above neighboring block, only intra prediction modes with directional modes 34 to 80 are selected.
- When searching samples in an above neighboring block, only intra prediction modes with directional modes 19 to 80 are selected.
- Selected only when the intra prediction mode of a current block is directional mode A and intra prediction mode B a sample in an above neighboring block satisfies |A-B|< K. For example, when K is 5 and A is mode 40, the intra prediction mode of a sample in an above neighboring block may be selected only when it is directional mode 36 to 44. Here, K may be a fixed value, or may be adaptively determined according to the size, shape, etc. of a block.

The specific conditions may be applied independently of each other, or a plurality of conditions may be selected and applied simultaneously. When there is no intra prediction mode different from the intra prediction mode of a current block among the intra prediction modes of samples in an above neighboring block, a post-processing method proposed in the present disclosure may not be applied. When a plurality of intra prediction modes of a sample in an above neighboring block satisfy the specific condition, a sample in an above neighboring block for generating pred_above(x,y) may be selected based on the above-described search order.

Alternatively, when a plurality of intra prediction modes of a sample in an above neighboring block satisfy a specific condition, pred_above(x,y) may be generated by combining each prediction block after prediction blocks are generated based on each intra prediction mode. When there are at least N intra prediction modes of a sample in an above neighboring block, pred_above(x,y) may be generated by combining M prediction blocks generated based on selected M intra prediction modes. Here, M and N are a natural number greater than or equal to 2, and M may be a number equal to or less than N. The combination of M prediction blocks may be performed by weighted summing M prediction blocks. In this case, a weight applied to M prediction blocks may be equal. Alternatively, a weight applied to M prediction blocks may be determined based on the sum of absolute transformed differences (SATD) used in TIMD after applying TIMD by using a neighboring reference sample template.

For example, when the intra prediction mode of an above sample 1211 is directional mode 60 and the intra prediction mode of an above-left sample 1231 is directional mode 66, pred_above(x,y) may be generated by combining (weighted summing) a prediction block predicted by applying directional mode 60 to a current block and a prediction block predicted by applying directional mode 66 to a current block. In this case, a weight used for combination may be configured equally, or may be determined based on SATD used in TIMD.

In Equation 3, w1(x,y) may be determined by using Equation 4 or Equation 5 below.

【Equation 4】

$$w1(x,y) = \begin{cases} N, if \ y \le A \\ 0, \quad otherwise \end{cases}$$

【Equation 5】

$$w1(x,y) = \begin{cases} N * (A + 1 - y), if \ y \le A \\ 0, \quad otherwise \end{cases}$$

For Equation 4, constant weight N may be applied to w1 according to the y-coordinate of a prediction target sample in a current block. For Equation 5, w1 may decrease constantly as the y-coordinate of a prediction target sample in a current block increases. In Equations 4 and 5, N and A may have a specific fixed value, or may be adaptively determined according to the size and/or shape of a current block. For example, when N is 1/8 and A is 4, if the y-coordinate of a prediction target sample in a current block is 4, a weight (w1) is 1/8. If the y-coordinate of a prediction target sample in a current block is 1, a weight (w1) is 4/8(=1/2).

Alternatively, w1 may be determined in the same way as the method of wT and/or wL of PDPC. Alternatively, as in Equation 6 below, there may be various methods for calculating w1.

【Equation 6】

$$- w1(x,y) = \begin{cases} 0.25, if \ y = 1 \\ 0, \quad otherwise \end{cases}$$

$$- w1(x,y) = \begin{cases} 0.25, if \ y \le 2 \\ 0, \quad otherwise \end{cases}$$

$$- w1(x,y) = \begin{cases} 0.125, if \ y \le 4 \\ 0, \quad otherwise \end{cases}$$

$$- w1(x,y) = \begin{cases} 0.5, if \ y = 1 \\ 0.25, if \ y = 2 \\ 0, \quad otherwise \end{cases}$$

$$- w1(x,y) = \begin{cases} 0.25, if \ y = 1 \\ 0.125, if \ y = 2 \\ 0, \quad otherwise \end{cases}$$

$$- w1(x,y) = \begin{cases} 0.5, if \ y = 1 \\ 0.375, if \ y = 2 \\ 0.25, if \ y = 3 \\ 0.125, if \ y = 4 \\ 0, \quad otherwise \end{cases}$$

Whether to apply post-processing proposed in the present disclosure may be adaptively determined based on the intra prediction mode of a current block. Specifically, whether to apply post-processing may be determined based on conditions below.

- When the intra prediction mode of a current block is a non-directional prediction mode such as a PLANAR mode and a DC mode, a post-processing method proposed in the present disclosure is not applied to a current block.
- When the intra prediction mode of a current block is a MIP mode, an ISP mode, a MRL mode, a SGPM mode, a CIIP mode, a DIMD mode, a TIMD mode and/or an IntraTemplatematching mode, a post-processing method proposed in the present disclosure is not applied to a current block.
- When the value of width x height of a current block is less than or equal to K, a post-processing method proposed in the present disclosure is not applied to a current block. In this case, K may be a value between 4 and 65536.
- When the value of width x height of a current block is greater than or equal to K, a post-processing method proposed in the present disclosure is not applied to a current block. In this case, K may be a value between 4(=2x2) and 65536 (=256x256) .

The conditions determining whether to apply post-processing may be applied independently of each other, or a plurality of conditions may be selected and applied simultaneously.

Information representing whether a post-processing method proposed in the present disclosure is applied (i.e., application information) may be signaled from a Video Parameter Set (VPS), a Sequence Parameter Set (SPS), a Picture Parameter Set (PPS), a Picture Header, a Slice Header, and Decoding Capability Information (DCI) which are a high-level syntax (HLS). Alternatively, information representing whether a post-processing method is applied (i.e., application information) may be signaled to a VPS, a SPS, a PPS, a Picture Header, a Slice Header and DCI which are a high-level syntax (HLS). For example, when determining whether a post-processing method proposed in the present disclosure is applied in the unit of a PPS, information representing whether a post-processing method is applied (i.e., application information) may be transmitted to a PPS.

A post-processing method proposed in the present disclosure may adaptively determine whether to apply post-processing in an image decoding apparatus 200 without signaling of information determining whether to apply a post-processing method, or may explicitly signal information determining whether to apply a post-processing method to determine whether to apply post-processing. For example, information determining whether to apply post-processing in the unit of a CTU or a CU may be transmitted to an image decoding apparatus 200 by using a 1-bit flag. Alternatively, when post-processing proposed in the present disclosure is applied according to the size and shape of a specific block and/or whether a specific condition exists, information determining whether to apply a post-processing method may be transmitted to an image decoding apparatus 200 by using a 1-bit flag only in this case.

According to an embodiment of the present disclosure, information determining whether to apply post-processing to a coding unit may be adaptively signaled based on information determining whether to apply post-processing defined in a HLS. For example, when information determining whether to apply post-processing signaled in a SPS is false, a post-processing process proposed in the present disclosure is not applied to a coding unit, and information determining whether to apply post-processing to a coding unit may also not be transmitted.

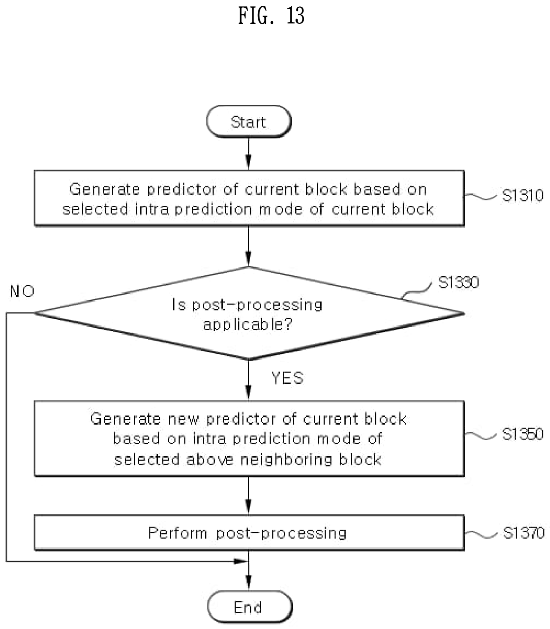

FIG. 13 is a flowchart of an image encoding/decoding method according to an embodiment of the present disclosure. Referring to FIG. 13, an image encoding apparatus 100 and/or an image decoding apparatus 200 may generate the predictor of a current block based on the selected intra prediction mode of a current block S1310. Here, a generated predictor may be the first prediction block. Afterwards, an image encoding apparatus 100 and/or an image decoding apparatus 200 may check whether to apply post-processing S1330. In other words, an image encoding apparatus 100 and/or an image decoding apparatus 200 may check whether a post-processing process may be applied to a current block. In an image decoding apparatus 200, whether to apply post-processing may be checked based on information representing whether to apply post-processing (i.e., application information). In this case, information representing whether to apply post-processing may be information signaled from a HLS.

When a post-processing process may be applied to a current block (YES in S1330), an image encoding apparatus 100 and/or an image decoding apparatus 200 may generate the new predictor of a current block based on the intra prediction mode of a selected above neighboring block S1350. A new predictor generated here may be the second prediction block. An image encoding apparatus 100 and/or an image decoding apparatus 200 may perform post-processing S1370. Specifically, an image encoding apparatus 100 and/or an image decoding apparatus 200 may perform a post-processing process by weighted summing a predictor generated in S1310 and a new predictor generated in S1350.

When a post-processing process may not be applied to a current block (NO in S1330), an image encoding apparatus 100 and/or an image decoding apparatus 200 may terminate a corresponding procedure without performing a post-processing process.

**Embodiment 2**

This embodiment proposes a method for post-processing a current block by considering the intra prediction mode of the neighboring block of a current block to which intra prediction is applied. In other words, a current block may be post-processed by combining the prediction block of a current block to which intra prediction is applied and a prediction block generated based on the intra prediction mode of a neighboring block.

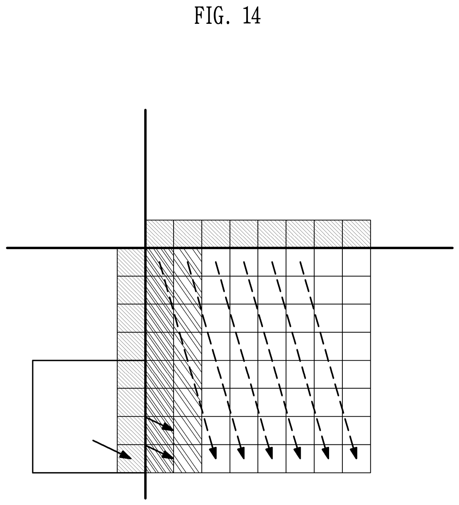

FIG. 14 is a diagram showing a method for post-processing the left area of a current block according to an embodiment of the present disclosure. In order to post-process the left area of a current block, a current block may be post-processed by weighted summing a prediction sample (or block) generated by applying the intra prediction mode of a sample in a left neighboring block to a current block and a prediction sample (or block) generated based on the intra prediction mode of a current block. In this case, the post-processing of a current block may be performed only on left N lines in a current block. N may be a natural number greater than or equal to 1 and less than or equal to a CTU size. For example, FIG. 14 shows an example in which post-processing is applied only to the left two lines of a 8x8 block. However, the present disclosure is not limited thereto, and the post-processing of a current block may also be performed on all samples in a current block.

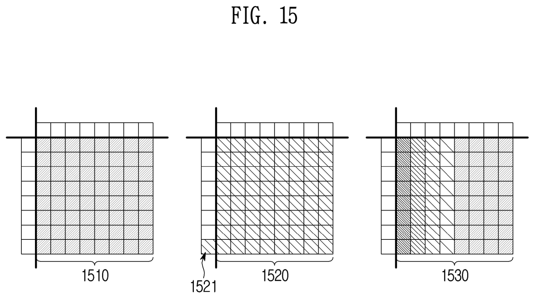

FIG. 15 is a diagram showing a method for post-processing an above area according to an embodiment of the present disclosure. Block 1510 in FIG. 15 may be a block predicted through an intra prediction mode selected from a current block (i.e., the first prediction block). In other words, block 1510 may be a prediction block generated by using the intra prediction mode of a current block (i.e., the first prediction block). Block 1520 may be a prediction block obtained by applying the intra prediction mode of a neighboring block including a left sample 1521 to a current block (i.e., the second prediction block). In other words, block 1520 may be a prediction block generated by applying the intra prediction mode of a left sample 1521 included in a neighboring block to a current block (i.e., the second prediction block).

Block 1530 may be a prediction block to which new post-processing is applied through the weighted sum of block 1510 and block 1520 (i.e., a final prediction block). Post-processing may be applied to left N lines in a current block. N may be a natural number greater than or equal to 1 and less than or equal to a CTU size. Block 1530 in FIG. 15 may be a block to which post-processing is applied to left 4 lines in a current block. The leftmost line, which is the darkest area in block 1530, may mean that a weight applied to the sample value of a sample in block 1520 is high, and a weight applied to the sample value of a sample in block 1520 may become lower as it goes to the right line. However, the present disclosure is not limited thereto, and the post-processing of a current block may also be performed on all samples in a current block.

The post-processing of a left area according to the present disclosure may be calculated by using Equation 7 below.

【Equation 7】

$$pred(x, y) = w0(w, y) * pred\_org(x, y) + w1(w, y) * pred\_left(x, y)$$

In Equation 7, (x, y) means the coordinate of a sample in a block. pred(x, y) means a final prediction block to which post-processing is applied. pred_org(x,y) (i.e., the first prediction block) means a pixel value predicted through an intra prediction mode selected from a current block. In other words, pred_org(x, y) means the sample value of a prediction sample generated by using the intra prediction mode of a current block. pred_left(x,y) (i.e., the second prediction block) means a pixel value obtained by applying intra prediction to a current block by using an intra prediction mode in a block including a left reference sample. In other words, pred_left(x,y) means the sample value of the prediction sample of a current block generated by using the intra prediction mode of a left sample included in the left neighboring block of a current block. An intra prediction mode used to generate pred_left(x,y) may be selected among the intra prediction modes of samples included in a left neighboring block.

w0(x,y) means a weight applied to pred_org(x,y). w1(x,y) means a weight applied to pred_left(x,y). Since the sum of w0(x,y) and w1(x,y) is always 1, a relationship between w0(x,y) and w1(x,y) may always satisfy Equation 8 below.

【Equation 8】

$$w0(w, y) = 1 - w1(x, y)$$

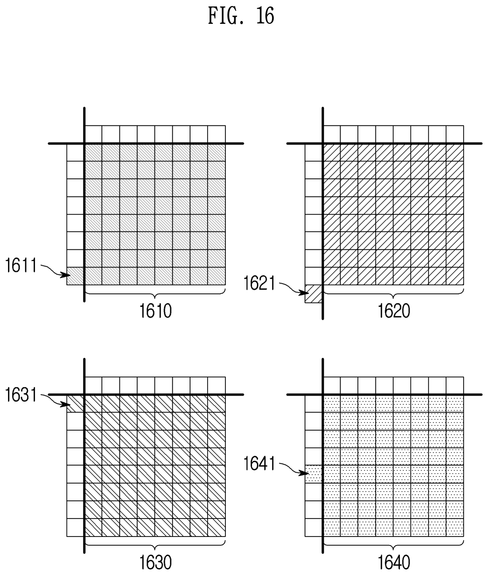

FIG. 16 is a diagram showing a method for selecting a left sample within a left neighboring block according to an embodiment of the present disclosure. Block 1610 in FIG. 16 may be pred_left(x,y) generated by using the intra prediction mode of a left sample 1611 included in the left neighboring block of a current block. Block 1620 may be pred_left(x,y) generated by using the intra prediction mode of a bottom-left sample 1621 included in the left neighboring block of a current block.

Block 1630 may be pred_left(x,y) generated by using the intra prediction mode of an above-left sample 1631 included in the left neighboring block of a current block. Block 1640 may be pred_left(x,y) generated by using the intra prediction mode of a left-center sample 1641 included in the left neighboring block of a current block. A left neighboring block referred to in the present disclosure may be a concept referring to all blocks located on the left of a current block. In other words, both the above-left neighboring block and the bottom-left neighboring block of a current block may be included in a left neighboring block.

When selecting an intra prediction mode from a left neighboring block, when there are various intra prediction modes, there may be various methods for determining which intra prediction mode is selected to generate pred_left(x,y). In other words, there may be various methods for searching samples in a left neighboring block in order to determine the intra prediction mode of which sample among the samples included in a left neighboring block.

As an example, an intra prediction mode for generating pred_left(x,y) may be selected in the order of the intra prediction mode of a left sample 1611, a bottom-left sample 1621, an above-left sample 1631 and a left-center sample 1641. However, when the intra prediction mode of a current block and the intra prediction mode of a sample in a selected left neighboring block are the same, the intra prediction mode of a corresponding sample may be excluded from selection. For example, when the intra prediction mode of a current block is directional mode 18 and the intra prediction mode of a left sample 1611 is also directional mode 18, a left sample 1611 may be excluded from selection. In this case, the intra prediction mode of a bottom-left sample 1621 in the next order may be selected. The selection order of samples included in a left neighboring block is not limited to the example and may be interchanged.

As another example, an intra prediction mode for generating pred_left(x,y) may be selected in the order of the intra prediction mode of a left sample 1611, a bottom-left sample 1621 and an above-left sample 1631. However, when the intra prediction mode of a current block and the intra prediction mode of a sample in a selected left neighboring block are the same, the intra prediction mode of a corresponding sample may be excluded from selection. The selection order of samples included in a left neighboring block is not limited to the example and may be interchanged.

As another example, an intra prediction mode for generating pred_left(x,y) may be selected as one of the intra prediction modes of all samples included in a left neighboring block. In this case, a sample in a left neighboring block for generating pred_left(x,y) may be determined as a sample selected by searching from an above-left sample 1631 in a bottom direction. However, when the intra prediction mode of a current block and the intra prediction mode of a sample in a selected left neighboring block are the same, the intra prediction mode of a corresponding sample may be excluded from selection.

As another example, an intra prediction mode for generating pred_left(x,y) may be selected as one of the intra prediction modes of all samples included in a left neighboring block. In this case, a sample in a left neighboring block for generating pred_left(x,y) may be determined as a sample selected by searching from a bottom-left sample 1621 in a top direction. However, when the intra prediction mode of a current block and the intra prediction mode of a sample in a selected left neighboring block are the same, the intra prediction mode of a corresponding sample may be excluded from selection.

When there is no intra prediction mode different from the intra prediction mode of a current block although samples in a left neighboring block are searched by the method, a post-processing method proposed in the present disclosure may not be applied.

According to an embodiment of the present disclosure, when searching samples in a left neighboring block, a specific condition may also be considered.

- When searching samples in a left neighboring block, a non-directional mode (a PLANAR mode, a DC mode) is excluded.
- When searching samples in a left neighboring block, a MIP mode, an ISP mode, a MRL mode, a SGPM mode, a CIIP mode, a DIMD mode, a TIMD mode and/or an IntraTemplatematching mode are excluded (the exclusion of the modes may be applied independently, or a plurality of modes may be selected and applied).
- When searching samples in a left neighboring block, a cross-component intra prediction mode is excluded.
- When searching samples in a left neighboring block, only intra prediction modes with directional modes -14 to 18 are selected.
- When searching samples in a left neighboring block, only intra prediction modes with directional modes -14 to 34 are selected.
- When searching samples in a left neighboring block, only intra prediction modes with directional modes -14 to 49 are selected.
- Selected only when the intra prediction mode of a current block is directional mode A and intra prediction mode B of a sample in a left neighboring block satisfies $|A-B| < K$. For example, when K is 5 and A is mode 8, the intra prediction mode of a sample in a left neighboring block may be selected only when it is directional mode 4 to 12. Here, K may be a fixed value, or may be adaptively determined according to the size, shape, etc. of a block.

The specific conditions may be applied independently of each other, or a plurality of conditions may be selected and applied simultaneously. When there is no intra prediction mode different from the intra prediction mode of a current block among the intra prediction modes of samples in a left neighboring block, a post-processing method proposed in the present disclosure may not be applied. When a plurality of intra prediction modes of a sample in a left neighboring block satisfy the specific condition, a sample in a left neighboring block for generating pred_left(x,y) may be selected based on the above-described search order.

Alternatively, when a plurality of intra prediction modes of a sample in a left neighboring block satisfy a specific condition, pred_left(x,y) may be generated by combining each prediction block after prediction blocks are generated based on each intra prediction mode. When there are at least N intra prediction modes of a sample in a left neighboring block, pred_left(x,y) may be generated by combining M prediction blocks generated based on selected M intra prediction modes. Here, M and N are a natural number greater than or equal to 2, and M may be a number equal to or less than N. The combination of M prediction blocks may be performed by weighted summing M prediction blocks. In this case, a weight applied to M prediction blocks may be equal. Alternatively, a weight applied to M prediction blocks may be determined based on SATD used in TIMD after applying TIMD by using a neighboring reference sample template.

For example, when the intra prediction mode of a left sample 1611 is directional mode 18 and the intra prediction mode of an above-left sample 1631 is directional mode 34, pred_left(x,y) may be generated by combining (weighted summing) a prediction block predicted by applying directional mode 18 to a current block and a prediction block predicted by applying directional mode 34 to a current block. In this case, a weight used for combination may be configured equally, or may be determined based on SATD used in TIMD.

In Equation 8, w1(x,y) may be determined by using Equation 9 or Equation 10 below.

【Equation 9】

$$w1(x,y) = \begin{cases} N, if \ x \leq A \\ 0, \quad otherwise \end{cases}$$

【Equation 10】

$$w1(x,y) = \begin{cases} N * (A + 1 - x), if \ y \leq A \\ 0, \quad otherwise \end{cases}$$

For Equation 9, constant weight N may be applied to w1 according to the x-coordinate of a prediction target sample in a current block. For Equation 10, w1 may decrease constantly as the x-coordinate of a prediction target sample in a current block increases. In Equations 9 and 10, N and A may have a specific fixed value, or may be adaptively determined according to the size and/or shape of a current block. For example, when N is 1/8 and A is 4, if the x-coordinate of a prediction target sample in a current block is 4, a weight (w1) is 1/8. If the x-coordinate of a prediction target sample in a current block is 1, a weight (w1) is 4/8 (=1/2) .

Alternatively, w1 may be determined in the same way as the method of wT and/or wL of PDPC. Alternatively, as in Equation 11 below, there may be various methods for calculating w1.

【Equation 11】

$$-w1(x,y) = \begin{cases} 0.25, if\ x = 1 \\ 0, \qquad otherwise \end{cases}$$

$$-w1(x,y) = \begin{cases} 0.25, if\ x \le 2 \\ 0, \qquad otherwise \end{cases}$$

$$-w1(x,y) = \begin{cases} 0.125, if\ x \le 4 \\ 0, \qquad otherwise \end{cases}$$

$$-w1(x,y) = \begin{cases} 0.5, if\ x = 1 \\ 0.25, if\ x = 2 \\ 0, \qquad otherwise \end{cases}$$

$$-w1(x,y) = \begin{cases} 0.25, if\ x = 1 \\ 0.125, if\ x = 2 \\ 0, \qquad otherwise \end{cases}$$

$$-w1(x,y) = \begin{cases} 0.5, if\ x = 1 \\ 0.375, if\ x = 2 \\ 0.25, if\ x = 3 \\ 0.125, if\ x = 4 \\ 0, \qquad otherwise \end{cases}$$

Whether to apply post-processing proposed in the present disclosure may be adaptively determined based on the intra prediction mode of a current block. Specifically, whether to apply post-processing may be determined based on conditions below.

- When the intra prediction mode of a current block is a non-directional prediction mode such as a PLANAR mode and a DC mode, a post-processing method proposed in the present disclosure is not applied to a current block.
- When the intra prediction mode of a current block is a MIP mode, an ISP mode, a MRL mode, a SGPM mode, a CIIP mode, a DIMD mode, a TIMD mode and/or an IntraTemplatematching mode, a post-processing method proposed in the present disclosure is not applied to a current block.
- When the value of width x height of a current block is less than or equal to K, a post-processing method proposed in the present disclosure is not applied to a current block. In this case, K may be a value between 4 and 65536.
- When the value of width x height of a current block is greater than or equal to K, a post-processing method proposed in the present disclosure is not applied to a current block. In this case, K may be a value between 4 and 65536.

The conditions determining whether to apply post-processing may be applied independently of each other, or a plurality of conditions may be selected and applied simultaneously.

Alternatively, information representing whether a post-processing method proposed in the present disclosure is applied (i.e., application information) may be signaled from a VPS, a SPS, a PPS, a Picture Header, a Slice Header and DCI which are a HLS. Alternatively, information representing whether a post-processing method is applied (i.e., application information) may be signaled to a VPS, a SPS, a PPS, a Picture Header, a Slice Header and DCI which are a HLS. For example, when determining whether a post-processing method proposed in the present disclosure is applied in the unit of a PPS, information representing whether a post-processing method is applied (i.e., application information) may be transmitted to a PPS.

A post-processing method proposed in the present disclosure may adaptively determine whether to apply post-processing in an image decoding apparatus 200 without signaling of information determining whether to apply a post-processing method, or may explicitly signal information determining whether to apply a post-processing method to determine whether to apply post-processing. For example, information determining whether to apply post-processing in the unit of a CTU or a CU may be transmitted to an image decoding apparatus 200 by using a 1-bit flag. Alternatively, when post-processing proposed in the present disclosure is applied according to the size and shape of a specific block and/or whether a specific condition exists, information determining whether to apply a post-processing method may be transmitted to an image decoding apparatus 200 by using a 1-bit flag only in this case.

According to an embodiment of the present disclosure, information determining whether to apply post-processing to a coding unit may be adaptively signaled based on information determining whether to apply post-processing defined in a HLS. For example, when information determining whether to apply post-processing signaled in a SPS is false, a post-processing process proposed in the present disclosure is not applied to a coding unit, and information determining whether to apply post-processing to a coding unit may also not be transmitted.

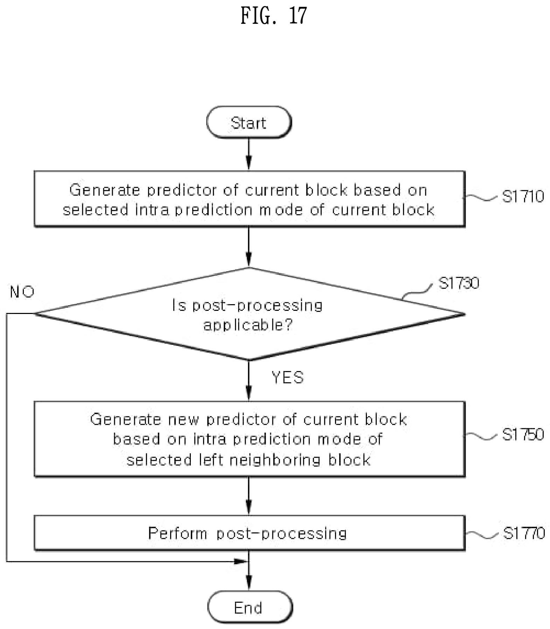

FIG. 17 is a flowchart of an image encoding/decoding method according to an embodiment of the present disclosure. Referring to FIG. 17, an image encoding apparatus 100 and/or an image decoding apparatus 200 may generate the predictor of a current block based on the selected intra prediction mode of a current block S1710. Here, a generated predictor may be the first prediction block. Afterwards, an image encoding apparatus 100 and/or an image decoding apparatus 200 may check whether to apply post-processing S1730. In other words, an image encoding apparatus 100 and/or an image decoding apparatus 200 may check whether a post-processing process may be applied to a current block. In an image decoding apparatus 200, whether to apply post-processing may be checked based on information representing whether to apply post-processing (i.e., application information). In this case, information representing whether to apply post-processing may be information signaled from a HLS.

When a post-processing process may be applied to a current block (YES in S1730), an image encoding apparatus 100 and/or an image decoding apparatus 200 may generate the new predictor of a current block based on the intra prediction mode of a selected left neighboring block S1750. A new predictor generated here may be the second prediction block. An image encoding apparatus 100 and/or an image decoding apparatus 200 may perform post-processing S1770. Specifically, an image encoding apparatus 100 and/or an image decoding apparatus 200 may perform a post-processing process by weighted summing a predictor generated in S1710 and a new predictor generated in S1750.

When a post-processing process may not be applied to a current block (NO in S1730), an image encoding apparatus 100 and/or an image decoding apparatus 200 may terminate a corresponding procedure without performing a post-processing process.

### Embodiment 3

This embodiment proposes a method for post-processing a current block by considering the intra prediction mode of the neighboring block of a current block to which intra prediction is applied. In other words, a current block may be post-processed by combining the prediction block of a current block to which intra prediction is applied and a prediction block generated based on the intra prediction mode of a neighboring block. In particular, this embodiment proposes a method for post-processing the above and left areas of a current block.

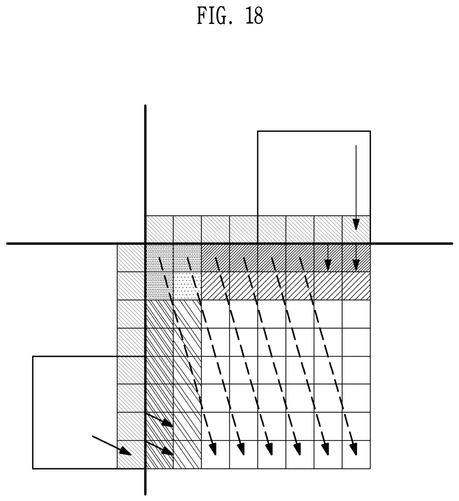

FIG. 18 is a diagram showing a method for post-processing the above-left area of a current block according to an embodiment of the present disclosure. In order to post-process the above area and the left area of a current block, a current block may be post-processed by weighted summing a prediction sample (or block) generated by applying the intra prediction mode of a sample in an above neighboring block and the intra prediction mode of a sample in a left neighboring block to a current block and a prediction sample (or block) generated based on the intra prediction mode of a current block. In this case, the post-processing of a current block may be performed only on above N lines and left N lines in a current block. N may be a natural number greater than or equal to 1 and less than or equal to a CTU size. For example, FIG. 18 shows an example in which post-processing is applied only to the left two lines and the above two lines of a 8x8 block. However, the present disclosure is not limited thereto, and the post-processing of a current block may also be performed on all samples in a current block.

The post-processing of a left area and an above area according to the present disclosure may be calculated by using Equation 12 below.

【Equation 12】

$$pred(x,y) = w0(w,y) * pred\_org(x,y) + w1(w,y) * pred\_above(x,y) + w2(x,y) * pred\_left(x,y)$$

In Equation 12, (x, y) means the coordinate of a sample in a block. pred(x, y) means a final prediction block to which post-processing is applied. pred_org(x,y) means a pixel value predicted through an intra prediction mode selected from a current block. In other words, pred_org(x, y) means the sample value of a prediction sample generated by using the intra prediction mode of a current block. pred_above(x,y) means a pixel value obtained by applying intra prediction to a current block by using an intra prediction mode in a block including an above reference sample. In other words, pred_above(x, y) means the sample value of the prediction sample of a current block generated by using the intra prediction mode of an above sample included in the above neighboring block of a current block. pred_above(x,y) may be generated in the same way as in Embodiment 1.

pred_left(x,y) means a pixel value obtained by applying intra prediction to a current block by using an intra prediction mode in a block including a left reference sample. In other words, pred_left(x,y) means the sample value of the prediction sample of a current block generated by using the intra prediction mode of a left sample included in the left neighboring block of a current block. An intra prediction mode used to generate pred_left(x,y) may be selected among the intra prediction modes of samples included in a left neighboring block. pred_left(x,y) may be generated in the same way as in Embodiment 2.

w0(x,y) means a weight applied to pred_org(x,y). w1(x,y) means a weight applied to pred_above(x,y). w2(x,y) means a weight applied to pred_left(x,y). Since the sum of w0(x,y), w1(x,y) and w2(x,y) is always 1, a relationship between w0(x,y), w1(x,y) and w2(x,y) may always satisfy Equation 13 below.

【Equation 13】

$$w0(w, y) = 1 - w1(x, y) - w2(x, y)$$

w1(x,y) and w2(x,y) may be determined by using Equation 14 or Equation 15 below.

【Equation 14】

$$w1(x, y) = \begin{cases} 0.5N, if\ y \leq A\ and\ x \leq B \\ N, if\ y \leq A\ and\ x > B \\ 0, \quad otherwise \end{cases}$$

$$w2(x, y) = \begin{cases} 0.5N, if\ x \leq B\ and\ y \leq A \\ N, if\ x \leq B\ and\ y > A \\ 0, \quad otherwise \end{cases}$$

【Equation 15】

$$w1(x, y) = \begin{cases} 0.5N * (A + 1 - y), if\ y \leq A\ and\ x \leq B \\ N * (A + 1 - y), if\ y \leq A\ and\ x > B \\ 0, \quad otherwise \end{cases}$$

$$w2(x, y) = \begin{cases} 0.5N * (B + 1 - x), if\ x \leq B\ and\ y \leq A \\ N * (B + 1 - x), if\ x \leq B\ and\ y > A \\ 0, \quad otherwise \end{cases}$$

For Equation 14, w1(x,y) may be determined as constant weight N according to the y-coordinate of a prediction target sample in a current block. For Equation 15, w1(x,y) may decrease constantly as the y-coordinate of a prediction target sample in a current block increases. In Equations 14 and 15, N and A may have a specific fixed value, or may be adaptively changed according to the size and/or shape of a current block.

For Equation 14, w2(x,y) may be determined as constant weight N according to the x-coordinate of a prediction target sample in a current block. For Equation 15, w2(x,y) may decrease constantly as the x-coordinate of a prediction target sample in a current block increases. In Equations 14 and 15, N and B may have a specific fixed value, or may be adaptively changed according to the size and/or shape of a current block.

Alternatively, w1(x,y) and w2(x,y) may be determined in the same way as the method of wT and/or wL of PDPC. Alternatively, there may be various methods for obtaining w1(x,y) and w2(x,y) as in Equations 16 and 17 below.

【Equation 16】

$$-w1(x,y) = \begin{cases} 0.25, & if\ y = 1\ and\ x = 1 \\ 0.25, & if\ y = 1 \\ 0, & otherwise \end{cases}$$

$$w2(x,y) = \begin{cases} 0.25, & if\ x = 1\ and\ y = 1 \\ 0.25, & if\ x = 1 \\ 0, & otherwise \end{cases}$$

$$-w1(x,y) = \begin{cases} 0.125, & if\ y \leq 2\ and\ x \leq 2 \\ 0.25, & if\ y \leq 2 \\ 0, & otherwise \end{cases}$$

$$w2(x,y) = \begin{cases} 0.125, & if\ x \leq 2\ and\ y \leq 2 \\ 0.25, & if\ x \leq 2 \\ 0, & otherwise \end{cases}$$

$$-w1(x,y) = \begin{cases} 0.5 * 0.125, & if\ y \leq 4\ and\ x \leq 4 \\ 0.125, & if\ y \leq 4 \\ 0, & otherwise \end{cases}$$

$$w2(x,y) = \begin{cases} 0.5 * 0.125, & if\ x \leq 4\ and\ y \leq 4 \\ 0.125, & if\ x \leq 4 \\ 0, & otherwise \end{cases}$$

【Equation 17】

$$- w1(x,y) = \begin{cases} 0.5 * 0.25, if\ y = 1\ and\ x \le 2 \\ 0.125 * 0.125, if\ y = 2\ and\ x \le 2 \\ 0.25, if\ y = 1\ and\ x > 2 \\ 0.125, if\ y = 2\ and\ x > 2 \\ 0, \quad otherwise \end{cases}$$

$$w2(x,y) = \begin{cases} 0.5 * 0.25, if\ x = 1\ and\ y \le 2 \\ 0.125 * 0.125, if\ x = 2\ and\ y \le 2 \\ 0.25, if\ x = 1\ and\ y > 2 \\ 0.125, if\ x = 2\ and\ y > 2 \\ 0, \quad otherwise \end{cases}$$

$$- w1(x,y) = \begin{cases} 0.5 * 0.5, if\ y = 1\ and\ x \le 4 \\ 0.5 * 0.375, if\ y = 2\ and\ x \le 4 \\ 0.5 * 0.25, if\ y = 3\ and\ x \le 4 \\ 0.5 * 0.125, if\ y = 4\ and\ x \le 4 \\ 0.5, if\ y = 1\ and\ x > 4 \\ 0.375, if\ y = 2\ and\ x > 4 \\ 0.25, if\ y = 3\ and\ x > 4 \\ 0.125, if\ y = 4\ and\ x > 4 \\ 0, \quad otherwise \end{cases}$$

$$w2(x,y) = \begin{cases} 0.5 * 0.5, if\ x = 1\ and\ y \le 4 \\ 0.5 * 0.375, if\ x = 2\ and\ y \le 4 \\ 0.5 * 0.25, if\ x = 3\ and\ y \le 4 \\ 0.5 * 0.125, if\ x = 4\ and\ y \le 4 \\ 0.5, if\ x = 1\ and\ y > 4 \\ 0.375, if\ x = 2\ and\ y > 4 \\ 0.25, if\ x = 3\ and\ y > 4 \\ 0.125, if\ x = 4\ and\ y > 4 \\ 0, \quad otherwise \end{cases}$$

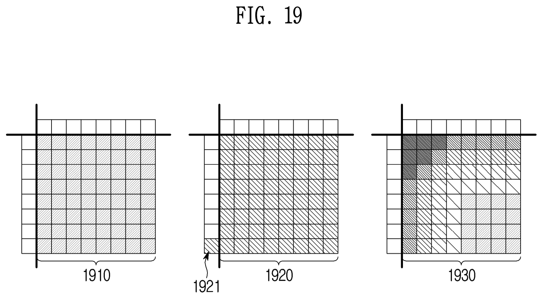

FIG. 19 is a diagram showing a method for post-processing an above-left area according to an embodiment of the present disclosure. Block 1910 in FIG. 19 may be a block predicted through an intra prediction mode selected from a current block (i.e., the first prediction block). In other words, block 1910 may be a prediction block generated by using the intra prediction mode of a current block (i.e., the first prediction block). Block 1920 may be a prediction block obtained by applying the intra prediction mode of a neighboring block including a left sample 1921 to a current block (i.e., the second prediction block). In other words, block 1920 may be a prediction block generated by applying the intra prediction mode of a left sample 1921 included in a neighboring block to a current block (i.e., the second prediction block).

Block 1930 may be a prediction block to which new post-processing is applied through the weighted sum of block 1910 and block 1920 (i.e., a final prediction block). Post-processing may be applied to left N lines and above N lines in a current block. N may be a natural number greater than or equal to 1 and less than or equal to a CTU size. Block 1930 in FIG. 19 may be a block to which post-processing is applied to left 4 lines and above 4 lines in a current block. The leftmost and abovemost lines, which are the darkest area in block 1930, may mean that a weight applied to the sample value of a sample in block 1920 is high, and a weight applied to the sample value of a sample in block 1920 may become lower as it goes to the bottom-right. However, the present disclosure is not limited thereto, and the post-processing of a current block may also be performed on all samples in a current block.

A method for applying post-processing by integrating an above area and a left area according to the present disclosure may be performed by using Equation 18 below.

【Equation 18】

$$pred(x,y) = w0(w,y) * pred\_org(x,y) + w1(w,y) * pred\_ref(x,y)$$

In Equation 18, (x, y) means the coordinate of a sample in a block. pred(x, y) means a final prediction block to which post-processing is applied. pred_org(x,y) means a pixel value predicted through an intra prediction mode selected from a current block. In other words, pred_org(x, y) means the sample value of a prediction sample generated by using the intra prediction mode of a current block. pred_ref(x,y) means a pixel value obtained by applying intra prediction to a current block by using an intra prediction mode in a block including above and left reference samples. In other words, pred_ref(x,y) means the sample value of the prediction sample of a current block generated by using the intra prediction mode of a sample included in the above and left neighboring blocks of a current block.

w0(x,y) means a weight applied to pred_org(x,y). w1(x,y) means a weight applied to pred_ref(x,y). Since the sum of w0(x,y) and w1(x,y) is always 1, a relationship between w0(x,y) and w1(x,y) may always satisfy Equation 19 below.

【Equation 19】

$$w0(w,y) = 1 - w1(x,y)$$

An intra prediction mode used to obtain pred_ref(x,y) in Equation 18 may be selected within blocks including left and above reference samples.

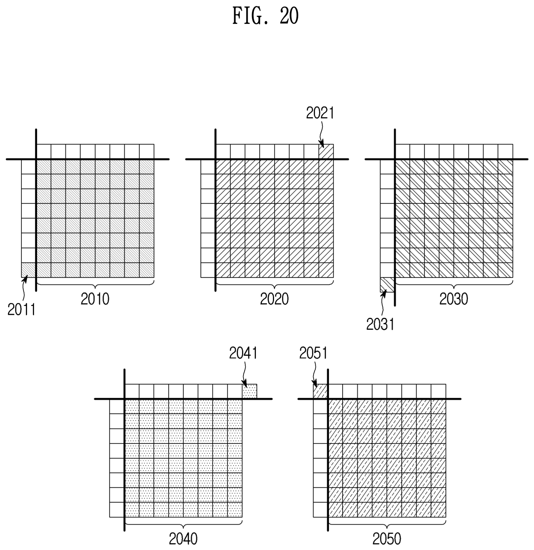

FIG. 20 is a diagram showing a method for selecting a sample within a left neighboring block and an above neighboring block according to an embodiment of the present disclosure. Block 2010 in FIG. 20 may be pred_ref(x,y) generated by using the intra prediction mode of a left sample 2011 included in the left neighboring block of a current block. Block 2020 may be pred_ref(x,y) generated by using the intra prediction mode of an above sample 2021 included in the above neighboring block of a current block.

Block 2030 may be pred_ref(x,y) generated by using the intra prediction mode of a bottom-left sample 2031 included in the left neighboring block of a current block. Block 2040 may be pred_ref(x,y) generated by using the intra prediction mode of an above-right sample 2041 included in the above neighboring block of a current block. Block 2050 may be pred_ref(x,y) generated by using the intra prediction mode of an above-left sample 2051 included in the left neighboring block (or above neighboring block) of a current block.

A left neighboring block referred to in the present disclosure may be a concept referring to all blocks located on the left of a current block. In other words, both the above-left neighboring block and the bottom-left neighboring block of a current block may be included in a left neighboring block. In addition, an above neighboring block referred to in the present disclosure may be a concept referring to all blocks located on the above of a current block. In other words, both the above-left neighboring block and the above-right neighboring block of a current block may be included in an above neighboring block.

When selecting an intra prediction mode from a left neighboring block and an above neighboring block, when there are various intra prediction modes, there may be various methods for determining which intra prediction mode is selected to generate pred_ref(x,y). In other words, there may be various methods for searching samples in a left neighboring block and an above neighboring block in order to determine the intra prediction mode of which sample among the samples included in a left neighboring block and an above neighboring block.

As an example, an intra prediction mode for generating pred_ref(x,y) may be selected in the order of the intra prediction mode of a left sample 2011, an above sample 2021, a bottom-left sample 2023, an above-right sample 2041 and an above-left sample 2051. However, when the intra prediction mode of a current block and the intra prediction mode of a sample in a selected left neighboring block or above neighboring block are the same, the intra prediction mode of a corresponding sample may be excluded from selection. For example, when the intra prediction mode of a current block is directional mode 18 and the intra prediction mode of a left sample 2011 is also directional mode 18, a left sample 2011 may be excluded from selection. In this case, the intra prediction mode of an above sample 2021 in the next order may be selected. The selection order of samples included in a left neighboring block and/or an above neighboring block is not limited to the example and may be interchanged.

When there is no intra prediction mode different from the intra prediction mode of a current block although samples in a left neighboring block and/or an above neighboring block are searched by the method, a post-processing method proposed in the present disclosure may not be applied.

According to an embodiment of the present disclosure, when searching samples in a left neighboring block and/or an above neighboring block, a specific condition may also be considered.

- When searching samples in a left neighboring block and/or an above neighboring block, a non-directional mode (a PLANAR mode, a DC mode) is excluded.

- When searching samples in a left neighboring block and/or an above neighboring block, a MIP mode, an ISP mode, a MRL mode, a SGPM mode, a CIIP mode, a DIMD mode, a TIMD mode and/or an IntraTemplatematching mode are excluded (the exclusion of the modes may be applied independently, or a plurality of modes may be selected and applied).
- When searching samples in a left neighboring block and/or an above neighboring block, a cross-component intra prediction mode is excluded.
- When searching samples in an above neighboring block, only intra prediction modes with directional modes 50 to 80 are selected.
- When searching samples in an above neighboring block, only intra prediction modes with directional modes 34 to 80 are selected.
- When searching samples in an above neighboring block, only intra prediction modes with directional modes 19 to 80 are selected.
- When searching samples in a left neighboring block, only intra prediction modes with directional modes -14 to 18 are selected.
- When searching samples in a left neighboring block, only intra prediction modes with directional modes -14 to 34 are selected.
- When searching samples in a left neighboring block, only intra prediction modes with directional modes -14 to 49 are selected.
- Selected only when the intra prediction mode of a current block is directional mode A and intra prediction mode B of a sample in a left neighboring block or an above neighboring block satisfies |A-B|< K. For example, when K is 5 and A is mode 8, the intra prediction mode of a sample in a left neighboring block or an above neighboring block may be selected only when it is directional mode 4 to 12. Here, K may be a fixed value, or may be adaptively determined according to the size, shape, etc. of a block.

The specific conditions may be applied independently of each other, or a plurality of conditions may be selected and applied simultaneously. When there is no intra prediction mode different from the intra prediction mode of a current block among the intra prediction modes of samples in a left neighboring block and/or an above neighboring block, a post-processing method proposed in the present disclosure may not be applied. When a plurality of intra prediction modes of a sample in a left neighboring block and/or an above neighboring block satisfy the specific condition, a sample in a left neighboring block and/or an above neighboring block for generating pred_ref(x,y) may be selected based on the above-described search order.

Alternatively, when a plurality of intra prediction modes of a sample in a left neighboring block and/or an above neighboring block satisfy a specific condition, pred_ref(x,y) may be generated by combining each prediction block after prediction blocks are generated based on each intra prediction mode. When there are at least N intra prediction modes of a sample in a left neighboring block and/or an above neighboring block, pred_ref(x,y) may be generated by combining M prediction blocks generated based on selected M intra prediction modes. Here, M and N are a natural number greater than or equal to 2, and M may be a number equal to or less than N. The combination of M prediction blocks may be performed by weighted summing M prediction blocks. In this case, a weight applied to M prediction blocks may be equal. Alternatively, a weight applied to M prediction blocks may be determined based on SATD used in TIMD after applying TIMD by using a neighboring reference sample template.

For example, when the intra prediction mode of a left sample 2011 is directional mode 6 and the intra prediction mode of an above-left sample 2031 is directional mode 66, pred_ref(x,y) may be generated by combining (weighted summing) a prediction block predicted by applying directional mode 6 to a current block and a prediction block predicted by applying directional mode 66 to a current block. In this case, a weight used for combination may be configured equally, or may be determined based on SATD used in TIMD.

In Equation 19, w1(x,y) may be determined by using Equation 20 below.

【Equation 20】

$$- w1(x,y) = \begin{cases} N, if \min(x,y) \leq A \\ 0, \quad otherwise \end{cases}$$

$$- w1(x,y) = \begin{cases} N * (A + 1 - \min(x,y)), if \min(x,y) \leq A \\ 0, \quad otherwise \end{cases}$$

In Equation 20, min(x,y) means the smaller value between x and y coordinate values. In the first formula of Equation 20, w1(x,y) may be determined as constant weight N according to the x-coordinate of a prediction target sample in a current block. For the second formula of Equation 20, w1(x,y) may decrease constantly as the x-coordinate of a prediction target sample in a current block increases. In Equation 20, N and A may have a specific fixed value, or may be adaptively determined according to the size and/or shape of a current block. For example, when N is 1/8 and A is 4, if the coordinate of a prediction target sample in a current block is (4,5), min(x,y) becomes 4 and a weight (w1) becomes 1/8. If the coordinate of a prediction target sample in a current block is (3,1), min(x,y) becomes 1 and a weight (w1) becomes 4/8 (=1/2).

Alternatively, w1(x,y) may be determined in the same way as the method of wT and/or wL of PDPC. Alternatively, as in Equation 21 below, there may be various methods for calculating w1(x,y).

【Equation 21】

$$-w1(x,y) = \begin{cases} 0.25, & if \ \min(x,y) = 1 \\ 0, & otherwise \end{cases}$$

$$-w1(x,y) = \begin{cases} 0.25, & if \ \min(x,y) \leq 2 \\ 0, & otherwise \end{cases}$$

$$-w1(x,y) = \begin{cases} 0.125, & if \ \min(x,y) \leq 4 \\ 0, & otherwise \end{cases}$$

$$-w1(x,y) = \begin{cases} 0.5, & if \ \min(x,y) = 1 \\ 0.25, & if \ \min(x,y) = 2 \\ 0, & otherwise \end{cases}$$

$$-w1(x,y) = \begin{cases} 0.25, & if \ \min(x,y) = 1 \\ 0.125, & if \ \min(x,y) = 2 \\ 0, & otherwise \end{cases}$$

$$-w1(x,y) = \begin{cases} 0.5, & if \ \min(x,y) = 1 \\ 0.375, & if \ \min(x,y) = 2 \\ 0.25, & if \ \min(x,y) = 3 \\ 0.125, & if \ \min(x,y) = 4 \\ 0, & otherwise \end{cases}$$

Whether to apply post-processing proposed in the present disclosure may be adaptively determined based on the intra prediction mode of a current block. Specifically, whether to apply post-processing may be determined based on conditions below.

- When the intra prediction mode of a current block is a non-directional prediction mode such as a PLANAR mode and a DC mode, a post-processing method proposed in the present disclosure is not applied to a current block.
- When the intra prediction mode of a current block is a MIP mode, an ISP mode, a MRL mode, a SGPM mode, a CIIP mode, a DIMD mode, a TIMD mode and/or an IntraTemplatematching mode, a post-processing method proposed in the present disclosure is not applied to a current block.
- When the value of width x height of a current block is less than or equal to K, a post-processing method proposed in the present disclosure is not applied to a current block. In this case, K may be a value between 4 and 65536.
- When the value of width x height of a current block is greater than or equal to K, a post-processing method proposed in the present disclosure is not applied to a current block. In this case, K may be a value between 4 and 65536.

The conditions determining whether to apply post-processing may be applied independently of each other, or a plurality of conditions may be selected and applied simultaneously.

Alternatively, information representing whether a post-processing method proposed in the present disclosure is applied (i.e., application information) may be signaled from a VPS, a SPS, a PPS, a Picture Header, a Slice Header and DCI which are a HLS. Alternatively, information representing whether a post-processing method is applied (i.e., application information) may be signaled to a VPS, a SPS, a PPS, a Picture Header, a Slice Header and DCI which are a HLS. For example, when determining whether a post-processing method proposed in the present disclosure is applied in the unit of a PPS, information representing whether a post-processing method is applied (i.e., application information) may be transmitted to a PPS.

A post-processing method proposed in the present disclosure may adaptively determine whether to apply post-processing in an image decoding apparatus 200 without signaling of information determining whether to apply a post-processing method, or may explicitly signal information determining whether to apply a post-processing method to determine whether to apply post-processing. For example, information determining whether to apply post-processing in the unit of a CTU or a CU may be transmitted to an image decoding apparatus 200 by using a 1-bit flag. Alternatively, when post-processing proposed in the present disclosure is applied according to the size and shape of a specific block and/or whether a specific condition exists, information determining whether to apply a post-processing method may be transmitted to an image decoding apparatus 200 by using a 1-bit flag only in this case.

According to an embodiment of the present disclosure, information determining whether to apply post-processing to a coding unit may be adaptively signaled based on information determining whether to apply post-processing defined in a HLS. For example, when information determining whether to apply post-processing signaled in a SPS is false, a post-processing process proposed in the present disclosure is not applied to a coding unit, and information determining whether to apply post-processing to a coding unit may also not be transmitted.

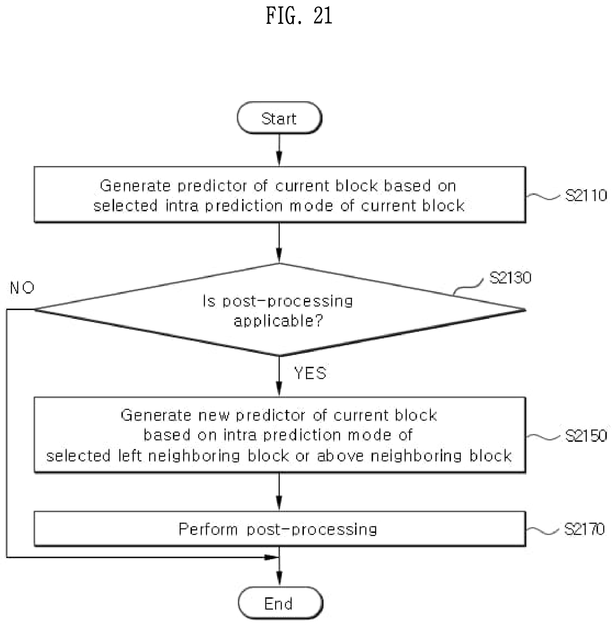

FIG. 21 is a flowchart of an image encoding/decoding method according to an embodiment of the present disclosure. Referring to FIG. 21, an image encoding apparatus 100 and/or an image decoding apparatus 200 may generate the predictor of a current block based on the selected intra prediction mode of a current block S2110. Here, a generated predictor may be the first prediction block. Afterwards, an image encoding apparatus 100 and/or an image decoding apparatus 200 may check whether to apply post-processing S2130. In other words, an image encoding apparatus 100 and/or an image decoding apparatus 200 may check whether a post-processing process may be applied to a current block. In an image decoding apparatus 200, whether to apply post-processing may be checked based on information representing whether to apply post-processing (i.e., application information). In this case, information representing whether to apply post-processing may be information signaled from a HLS.

When a post-processing process may be applied to a current block (YES in S2130), an image encoding apparatus 100 and/or an image decoding apparatus 200 may generate the new predictor of a current block based on the intra prediction mode of a selected left neighboring block or above neighboring block S2150. A new predictor generated here may be the second prediction block. An image encoding apparatus 100 and/or an image decoding apparatus 200 may perform post-processing S2170. Specifically, an image encoding apparatus 100 and/or an image decoding apparatus 200 may perform a post-processing process by weighted summing a predictor generated in S2110 and a new predictor generated in S2150.

When a post-processing process may not be applied to a current block (NO in S2130), an image encoding apparatus 100 and/or an image decoding apparatus 200 may terminate a corresponding procedure without performing a post-processing process.

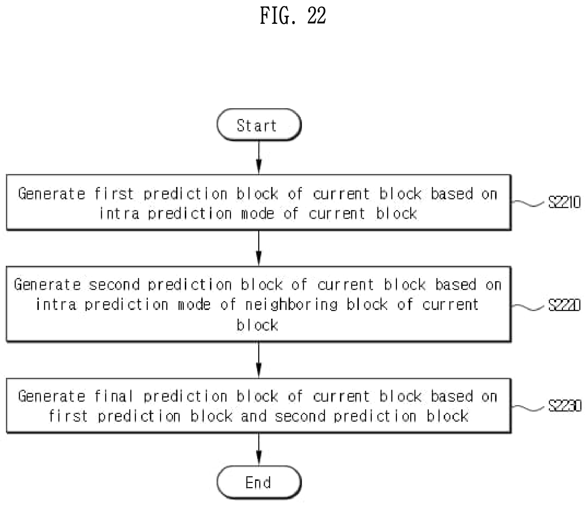

FIG. 22 is a flowchart of an image encoding/decoding method according to an embodiment of the present disclosure. Referring to FIG. 22, an image encoding apparatus 100 and/or an image decoding apparatus 200 may generate the first prediction block of a current block based on the intra prediction mode of a current block S2210. In addition, an image encoding apparatus 100 and/or an image decoding apparatus 200 may generate the second prediction block of a current block based on the intra prediction mode of a current block S2230. In this case, a neighboring block may be at least one of an above neighboring block or a left neighboring block adjacent to the current block.

A left neighboring block referred to in the present disclosure may be a concept referring to all blocks located on the left of a current block. In other words, both the above-left neighboring block and the bottom-left neighboring block of a current block may be included in a left neighboring block. In addition, an above neighboring block referred to in the present disclosure may be a concept referring to all blocks located on the above of a current block. In other words, both the above-left neighboring block and the above-right neighboring block of a current block may be included in an above neighboring block.

After generating the first prediction block and the second prediction block, an image encoding apparatus 100 and/or an image decoding apparatus 200 may generate the final prediction block of a current block based on the first prediction block and the second prediction block S2250.

According to an embodiment of the present disclosure, the intra prediction mode of a neighboring block used to generate the second prediction block may be determined from intra prediction modes of samples included in a neighboring block. In this case, the intra prediction mode of a neighboring block may be determined in predetermined order from the intra prediction modes of samples included in a neighboring block. The specific order (i.e., search order) may be the same as described in Embodiments 1 to 3 above. In addition, the intra prediction mode of a neighboring block may be determined in a directional prediction mode among the intra prediction modes of samples included in a neighboring block. In other words, when the intra prediction mode of samples included in a neighboring block is not a directional prediction mode, a post-processing process proposed in the present disclosure may not be performed.

According to an embodiment of the present disclosure, the intra prediction mode of a neighboring block may be determined in a directional prediction mode within a predetermined range among the intra prediction modes of samples included in a neighboring block. In other words, the intra prediction mode of a neighboring block may be limited to a directional prediction mode within a predetermined range among the intra prediction modes of samples included in a neighboring block.

According to an embodiment of the present disclosure, the intra prediction mode of a neighboring block may be determined based on a difference between the intra prediction mode of a sample included in a neighboring block and the intra prediction mode of a current block. Here, a difference between intra prediction modes may mean a difference in an intra prediction mode value. In other words, the intra prediction mode of a neighboring block may be determined based on a difference between the intra prediction mode value of a sample included in a neighboring block and the intra prediction mode value of a current block.

According to an embodiment of the present disclosure, based on the intra prediction mode of samples included in a neighboring block being different, the second prediction block may be generated by weighted summing a plurality of prediction blocks generated by the intra prediction modes of each of the samples. For example, when one of the intra prediction modes of samples included in a neighboring block is prediction mode 18 and the other is prediction mode 60, the second prediction block may be generated by weighted summing a prediction block generated based on prediction mode 18 and a prediction block generated based on prediction mode 60.

According to an embodiment of the present disclosure, S2230 in FIG. 22 may be performed based on the intra prediction mode of a current block being a directional prediction mode. In other words, the second prediction block may be generated based on the intra prediction mode of a current block being a directional prediction mode. When the intra prediction mode of a current block is not a directional prediction mode, a post-processing process proposed in the present disclosure may not be performed.

According to an embodiment of the present disclosure, S2230 in FIG. 22 may be performed based on the size of a current block. In other words, the second prediction block may be generated based on the size of a current block. When the size of a current block does not satisfy a necessary condition, a post-processing process proposed in the present disclosure may not be performed. For example, the second prediction block may be generated only when the width x height of a current block is greater than or equal to (or exceeds) K. Here, K may be a value between 4 and 65536. Alternatively, the second prediction block may be generated only when the width x height of a current block is less than (or less than or equal to) K. Here, K may be a value between 4 and 65536.

According to an embodiment of the present disclosure, generating the second prediction block may be determined based on application information obtained from a bitstream. Here, application information may be information representing whether to apply a post-processing process to a current block. In addition, application information may be obtained from a HLS in a bitstream.

According to an embodiment of the present disclosure, a final prediction block may be generated by weighted summing the first prediction block and the second prediction block. Specifically, an image encoding apparatus 100 and/or an image decoding apparatus 200 may determine the first weight applied to the first prediction block. In addition, an image encoding apparatus 100 and/or an image decoding apparatus 200 may determine the second weight applied to the second prediction block. Based on determined first and second weights, a final prediction block may be generated by weighted summing the first prediction block and the second prediction block. The weighted sum of the first prediction block and the second prediction block may be performed by using one of Equation 2, Equation 7 or Equation 18.

The first weight and the second weight may be determined based on the x-coordinate of a sample included in a current block, the y-coordinate of a sample included in a current block, the size of a current block, the shape of a current block or a template matching cost. The first weight and the second weight may be determined by using one of Equations 4 to 6, Equations 9 to 11, Equations 14 to 17, Equation 20 or Equation 21.

Although the exemplary methods of the present disclosure are expressed as a series of operations for clarity of description, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

In addition, the various embodiments of the present disclosure may be implemented by hardware, firmware, software or a combination thereof. For implementation by hardware, they may be implemented by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), general processors, controllers, microcontrollers, microprocessors, etc.

In addition, an image decoding device and an image encoding device to which an embodiment of the present disclosure is applied may be included in a multimedia broadcasting transmitting and receiving device, a mobile communication terminal, a home cinema video device, a digital cinema video device, a surveillance camera, a video communication device, a real-time communication device such as a video communication, a mobile streaming device, a storage medium, a camcorder, a video-on-demand (VoD) service providing device, an OTT video (Over the above video) device, an Internet streaming service providing device, a three-dimensional (3D) video device, a video phone video device, a medical video device, etc., and may be used to process a video signal or a data signal. For example, an OTT video (Over the above video) device may include a game console, a Blu-ray player, an Internet-connected TV, a home theater system, a smartphone, a tablet PC, a digital video recorder (DVR), etc.

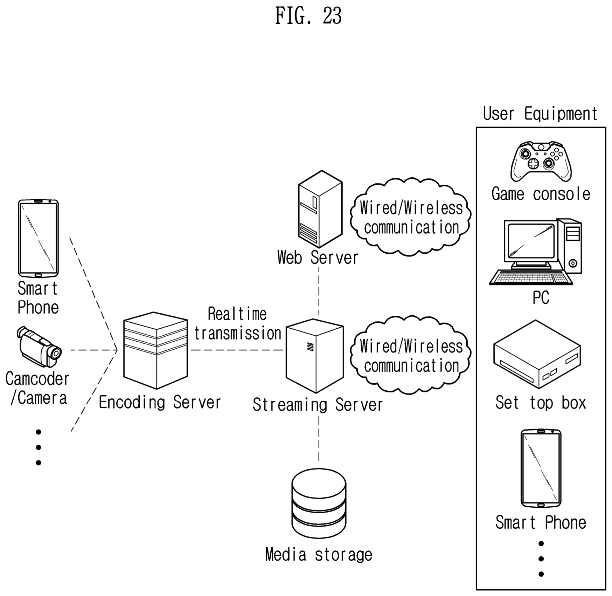

FIG. 23 shows an exemplary diagram of a content streaming system to which an embodiment of the present disclosure may be applied.

As shown in FIG. 23, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the image encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, comprising:

    generating a first prediction block of a current block based on an intra prediction mode of the current block;
    generating a second prediction block of the current block based on an intra prediction mode of a neighboring block of the current block; and
    generating a final prediction block of the current block based on the first prediction block and the second prediction block.

2. The method of Claim 1, wherein the neighboring block is at least one of an above neighboring block or a left neighboring block adjacent to the current block.

3. The method of Claim 1, wherein the intra prediction mode of the neighboring block is determined from intra prediction modes of samples included in the neighboring block.

4. The method of Claim 3, wherein the intra prediction mode of the neighboring block is determined in predetermined order from the intra prediction modes of the samples included in the neighboring block.

5. The method of Claim 3, wherein the intra prediction mode of the neighboring block is determined as a directional prediction mode among the intra prediction modes of the samples included in the neighboring block.

6. The method of Claim 5, wherein the intra prediction mode of the neighboring block is determined as a directional prediction mode within a predetermined range among the intra prediction modes of the samples included in the neighboring block.

7. The method of Claim 5, wherein the intra prediction mode of the neighboring block is determined based on a difference between an intra prediction mode of a sample included in the neighboring block and the intra prediction mode of the current block.

8. The method of Claim 1, wherein based on intra prediction modes of samples included in the neighboring block being different, the second prediction block is generated by weighted summing a plurality of prediction blocks generated by the intra prediction modes of the samples, respectively.

9. The method of Claim 1, wherein generating the second prediction block is performed based on the intra prediction mode of the current block being a directional prediction mode.

10. The method of Claim 1, wherein generating the second prediction block is performed based on a size of the current block.

11. The method of Claim 1, wherein generating the second prediction block is performed based on application information obtained from a bitstream.

12. The method of Claim 1, wherein the method further comprises:

determining a first weight applied to the first prediction block; and
determining a second weight applied to the second prediction block,
wherein based on the first weight and the second weight, the final prediction block is generated by weighted summing the first prediction block and the second prediction block, and
wherein the first weight and the second weight are determined based on a x-coordinate of a sample included in the current block, a y-coordinate of the sample included in the current block, a size of the current block, a shape of the current block or a template matching cost.

13. An image encoding method performed by an image encoding apparatus, comprising:

generating a first prediction block of a current block based on an intra prediction mode of the current block;
generating a second prediction block of the current block based on an intra prediction mode of a neighboring block of the current block; and
generating a final prediction block of the current block based on the first prediction block and the second prediction block.

14. A computer-readable recording medium storing a bitstream generated by the image encoding method in Claim 13.

15. A method for transmitting a bitstream generated by an image encoding method, the image encoding method comprising:

generating a first prediction block of a current block based on an intra prediction mode of the current block;
generating a second prediction block of the current block based on an intra prediction mode of a neighboring block of the current block; and

generating a final prediction block of the current block based on the first prediction block and the second prediction block.

FIG.1

FIG.2

EP 4 648 420 A2

## FIG.3

IMAGE DECODING APPARATUS (200)

BITSTREAM → ENTROPY DECODER (210) → DEQUANTIZER (220) → INVERSE TRANSFORMER (230) → (+) (235) → FILTER (240) → RECONSTRUCTED IMAGE

INTRA PREDICTOR (265)

INTER PREDICTOR (260)

MEMORY (250) — DPB

EP 4 648 420 A2

FIG.4

```
                    ┌─────────┐
                    │  START  │
                    └────┬────┘
                         │
                         ▼
    ┌────────────────────────────────────────────────┐
    │ PERFORM PREDICTION (DETERMINE INTRA PREDICTION  │
    │ MODE/TYPE, DERIVE NEIGHBORING REFERENCE SAMPLES, ├──~ S410
    │        GENERATE PREDICTION SAMPLES)             │
    └────────────────────┬───────────────────────────┘
                         │
                         ▼
    ┌────────────────────────────────────────────────┐
    │   RESIDUAL PROCESS (DERIVE RESIDUAL SAMPLES      │
    │        BASED ON PREDICTION SAMPLES)             ├──~ S420
    └────────────────────┬───────────────────────────┘
                         │
                         ▼
    ┌────────────────────────────────────────────────┐
    │     ENCODE IMAGE/VIDEO INFORMATION INCLUDING     │
    │  PREDICTION INFORMATION AND RESIDUAL INFORMATION ├──~ S430
    └────────────────────┬───────────────────────────┘
                         │
                         ▼
                    ┌─────────┐
                    │   END   │
                    └─────────┘
```

FIG. 5

ORIGINAL PICTURE →

RECONSTRUCTED REFERENCE
AREA IN CURRENT PICTURE →

185

186
INTRA PREDICTION
MODE/TYPE DETERMINER

187
REFERENCE SAMPLE
DERIVER

188
PREDICTION SAMPLE
DERIVER

INTRA PREDICTOR

→ INTRA PREDICTION
MODE/TYPE INFORMATION

→ PREDICTION SAMPLE(S)

FIG. 6

```
                    ( START )
                        |
                        v
+----------------------------------------------------+
| DETERMINE INTRA PREDICTION MODE/TYPE FOR CURRENT   |~ S610
| BLOCK BASED ON RECEIVED PREDICTION INFORMATION     |
+----------------------------------------------------+
                        |
                        v
+----------------------------------------------------+
|        DERIVE NEIGHBORING REFERENCE SAMPLES        |~ S620
+----------------------------------------------------+
                        |
                        v
+----------------------------------------------------+
|  PERFORM PREDICTION (GENERATE PREDICTION SAMPLES)  |~ S630
+----------------------------------------------------+
                        |
                        v
+----------------------------------------------------+
|         DERIVE RESIDUAL SAMPLES BASED ON           |~ S640
|             RESIDUAL INFORMATION                   |
+----------------------------------------------------+
                        |
                        v
+----------------------------------------------------+
| GENERATE RECONSTRUCTED BLOCK/PICTURE BASED ON      |~ S650
| PREDICTION SAMPLES AND RESIDUAL SAMPLES            |
+----------------------------------------------------+
                        |
                        v
                    (  END  )
```

FIG. 7

265

266

INTRA PREDICTION MODE/TYPE INFORMATION →

RECONSTRUCTED REFERENCE AREA IN CURRENT PICTURE →

INTRA PREDICTION
MODE/TYPE DETERMINER

267

REFERENCE SAMPLE
DERIVER

268

PREDICTION SAMPLE
DERIVER

→ PREDICTION SAMPLE

INTRA PREDICTOR

FIG. 8A

FIG. 8B

FIG. 8C

FIG. 8D

FIG. 9

FIG. 10

FIG. 11

# FIG. 12

FIG. 13

```
                        ┌─────────┐
                        │  Start  │
                        └─────────┘
                             │
                             ▼
    ┌──────────────────────────────────────────┐
    │  Generate predictor of current block based on  │ ⎯ S1310
    │  selected intra prediction mode of current block │
    └──────────────────────────────────────────┘
                             │
                             ▼
         NO              ◇───────────────◇            S1330
    ┌──────────────────< Is post-processing >
    │                    <    applicable?   >
    │                     ◇───────────────◇
    │                           │ YES
    │                           ▼
    │        ┌──────────────────────────────────┐
    │        │  Generate new predictor of current block │ ⎯ S1350
    │        │  based on intra prediction mode of    │
    │        │  selected above neighboring block     │
    │        └──────────────────────────────────┘
    │                           │
    │                           ▼
    │        ┌──────────────────────────────────┐
    │        │      Perform post-processing         │ ⎯ S1370
    │        └──────────────────────────────────┘
    │                           │
    │                           ▼
    │                        ┌─────────┐
    └───────────────────────>│   End   │
                             └─────────┘
```

FIG. 14

FIG. 15

1510    1521    1520    1530

FIG. 16

# FIG. 17

Start

Generate predictor of current block based on selected intra prediction mode of current block ⟶ S1710

Is post-processing applicable? ⟶ S1730

NO

YES

Generate new predictor of current block based on intra prediction mode of selected left neighboring block ⟶ S1750

Perform post-processing ⟶ S1770

End

FIG. 18

FIG. 19

FIG. 20

# FIG. 21

```
                    ┌─────────┐
                    │  Start  │
                    └────┬────┘
                         │
   ┌─────────────────────▼─────────────────────┐
   │  Generate predictor of current block based │ ～ S2110
   │  on selected intra prediction mode of      │
   │  current block                             │
   └─────────────────────┬─────────────────────┘
                         │
          NO            ╱╲            S2130
        ◄──────────────╱  ╲──────────
        │             ╱ Is post-    ╲
        │             ╲ processing  ╱
        │              ╲applicable?╱
        │               ╲╱
        │                │ YES
        │   ┌────────────▼────────────────────┐
        │   │ Generate new predictor of       │ ～ S2150
        │   │ current block based on intra    │
        │   │ prediction mode of selected     │
        │   │ left neighboring block or       │
        │   │ above neighboring block         │
        │   └────────────┬────────────────────┘
        │                │
        │   ┌────────────▼────────────────────┐
        │   │  Perform post-processing        │ ～ S2170
        │   └────────────┬────────────────────┘
        │                │
        └────────────────┤
                    ┌────▼────┐
                    │   End   │
                    └─────────┘
```

FIG. 22

Start

Generate first prediction block of current block based on intra prediction mode of current block — S2210

Generate second prediction block of current block based on intra prediction mode of neighboring block of current block — S2220

Generate final prediction block of current block based on first prediction block and second prediction block — S2230

End

FIG. 23